# EUROPEAN PATENT APPLICATION

(11) **EP 2 109 074 A1**
(43) Date of publication of application: **14.10.2009**
(21) Application number: 09251047.8
(22) Date of filing: 06.04.2009
(51) Int. Cl.: G06Q 10/00

(54) **Systems and methods for incident recording**

(30) Priority: 06.04.2008 US 42751 P
(71) Applicant: Taser International Inc., Scottsdale, AZ 85255-9603 (US)
(72) Inventor: Shekarri, Nache D., Phoenix, AZ 85045 (US); Smith, Patrick W., Scottsdale, AZ 85259 (US); Nerheim, Magne H., Paradise Valley, AZ 85253 (US)
(74) Representative: Carter, Stephen John

(57) **Abstract**

A primary subsystem communicates to a secondary subsystem a description of an incident. The primary subsystem includes a detector, a user interface, and a recorder. The detector detects data related to the incident. The user interface determines a revision related to the data. The recorder records the data and the revision for communication to the secondary subsystem.

## Description

### CROSS-REFERENCE TO RELATED APPLICATIONS

This application claims the benefit of U.S. Provisional Application No. 61/042,751 filed April 6, 2008.

### BACKGROUND

An incident refers to human or animal activities and to a period of time when these activities take place. Incidents include, for example, formation of agreements, transactions, negotiations, discussions, ceremonies, meetings, crimes, attempted crimes, disagreements, assaults, conflicts, discoveries, research, investigations, and surveillance. Incidents may include consequences including changes to property such as improvements, repairs, construction, production, manufacture, growth, harvesting, damage, loss, theft, burglary, arson, goods damaged in shipment, conditions of real estate, and/or conditions of agricultural and forestry property. An incident may include damage to property and/or injury to persons or animals. Damage to property or injury to persons or animals may be accidental or brought on by the action or failure to act of one or more persons.

A factual description of an incident may aid others to determine the identity of the property affected and/or persons injured; identity of witnesses, law enforcement personnel, and anyone contributing to the loss or extent of the loss or the injury or extent of the injury; any change in the property or change in the value of the property; and any change in the condition of an object, person, plant, or animal.

A description of an incident may also be used to establish responsibility for loss. For example, whether or not the facts of the incident require payment under an insurance policy may be determined on the basis of an incident report. When a weapon is used in an incident, responsibility for the loss or injury may in part be based on whether the weapon is used within the guidelines of a law enforcement agency, guidelines set forth by a manufacturer of the weapon, or policies and reasonable behavior or negligence as determined by local customs, courts, and educational/training institutions.

A report of an incident in many cases is evidence of facts regarding the incident. Evidence may be needed for proof of performance under an agreement, resolution of failure to perform under an agreement, proof of damage, injury, or loss, or for enforcement of customs, rules, regulations, laws, judicial orders, or directives from superiors such as employers, partners, custodians, guardians, relatives, officials, or higher ranking officers.

Foundation and corroboration support the use of a report of an incident in court. Validation of an incident report includes verifying the accuracy and completeness of the foundation and corroboration supporting the incident report.

Accurate and complete reporting of the facts surrounding an incident has great social, economic, and judicial importance. Incident reporting as practiced in the prior art has limitations that adversely affect accuracy and completeness. More accurate and more complete incident reports are needed and are provided by systems and methods according to the present invention.

### BRIEF DESCRIPTION OF THE DRAWING

Embodiments of the present invention will be described with reference to the drawing, wherein like designations denote like elements, and:
FIG. 1 is a functional block diagram of a secondary subsystem of a system for collecting and managing evidence, according to various aspects of the present invention;
FIG. 2 is a pictorial representation of a hypothetical incident involving two law enforcement officers apprehending a suspect while each officer is operating a respective primary subsystem of a system for collecting and managing evidence, according to various aspects of the present invention;
FIG. 3A is a functional block diagram of an implementation of one of the primary subsystems, also herein called an incident recorder, of FIG. 2;
FIG. 3B is a functional block diagram of an implementation of another primary subsystem, also herein called an activator, of a system for collecting and managing evidence, according to various aspects of the present invention;
FIG. 3C is a functional block diagram of an implementation of another primary subsystem, also herein called an electronic control device, of a system for collecting and managing evidence, according to various aspects of the present invention;
FIG. 4 is a data structure diagram describing the contents of memory in an implementation of the hand set of FIG. 3A;
FIG. 5 is a diagram of a user interface having controls and a display in an implementation of the hand set of FIG. 3A;
FIG. 6 is a state change diagram of states of the user interface of FIG. 5;
FIG. 7 is a plan view of another hypothetical incident involving three law enforcement officers apprehending a suspect while each officer operates a primary subsystem and the suspect comes into contact with a primary subsystem of a system for collecting and managing evidence, according to various aspects of the present invention; and
FIG. 8 is a communication sequence diagram for communication, according to various aspects of the present invention, between the primary subsystems of FIG. 7.

### DETAILED DESCRIPTION OF THE PREFERRED EMBODIMENTS

An incident report, as discussed herein, is a report of facts surrounding an incident. The incident report in a preferred implementation is intended to be admissible as evidence in court. The incident report consists entirely of information stored and communicated in one or more suitable electronic formats.

According to various aspects of the present invention, an incident report may include a combination of information (herein called incident information) including audio, photographs, video, forms, text, graphics, scans, detected signals, and electronic documents (e.g., email, word processing, spreadsheets, graphical models, photographs, equipment configuration data, equipment operation event logs). Scans include for example scanned paper documents (e.g., tickets, titles), scanned bar codes (e.g., on products, badges), scanned magnetic stripes (e.g., bank cards, driver's licenses), scanned magnetic media (e.g. tapes, disks), scanned optical media (e.g., CDs, DVDs), and scanned glyphs (e.g., on documents, products, badges). Glyphs include symbol marking and reading technologies (e.g., ECC200 DataMatrix, PDF 417). Detected signals include intercepted remote control signals (e.g., for mechanical and electrical equipment); intercepted communications systems simultaneously operating during the incident such as land line phones, cell phones, pagers, radios, tracking devices, media broadcasting stations, wireless and wired computer network links, and sources of interference with these systems; and measurements (e.g., environmental sensors for temperature, sensors for hazardous conditions, monitors for physical conditions).

Incident information may include descriptions of the persons, animals, and things at an incident including, for example, subsystems brought to the incident by law enforcement officers. These descriptions may be captured in any convenient manner (e.g., recorded speech, video, photographs, scans of markings on things).

After the first incident information is recorded and available for review, an incident report based on the incident information may be developed through selecting, adding, supplementing, organizing, emphasizing, and editing any of which being referred to herein as revising. The result of revising is herein called a revision.

Each revision of an incident report may result in the creation of a new version of the incident report. The prior version may be replaced by the new version. Preferably, the original version is retained for comparison and analysis with reference to the latest version. All versions may be retained. The incident information forming the basis for an incident report may be captured by an author who is operating a primary subsystem according to various aspects of the present invention, herein called an author-operator, or simply an operator. A primary subsystem, according to various aspects of the present invention, may facilitate any of the following actions by the author-operator: timely developing one or more incident reports, timely reviewing incident reports, and timely revising of incident reports.

An incident report, in whole or in part, may be presented to a user on a primary subsystem of the present invention that includes a display and/or on a workstation of a secondary subsystem. The secondary subsystem may include an evidence manager. The user of an evidence manager may obtain summaries of numerous incident reports using database query and reporting technologies and may view the results on the workstation. The incident report may be the subject of a predefined work flow. Any conventional work flow management process may be used to complete, validate, and/or authorize use of the incident report. These functions may be accomplished by different individuals along the work flow being managed. Portions of an incident report may be managed in converging work flows that produce a combined incident report in a new version.

For example, a plurality of primary subsystems may be used to collect data regarding an incident while proximate to the location of the incident. Each author-operator of the plurality of primary subsystems may add revisions to their respective data collected. Each revision of the respective primary subsystems would include a description of the incident or portions of the incident from the individual perspective of the author-operator thereby forming a plurality of respective incident reports. The respective incident reports may be transmitted to a secondary subsystem. One aspect of a work flow for incident reports received by a secondary subsystem may include a review of the respective incident reports by a single individual or a committee of individuals who annotate the respective incident reports. Annotations or revisions added by an individual or committee may be used to form a final incident report.

A individual or committee may further review respective incident reports to assess their validity, value as evidence, compliance with department rules regarding incident recording and revising, and to detect possible attempts to obscure or destroy evidence.

Any source of information may contribute to an incident report through operation of a primary subsystem, according to various aspects of the present invention. The incident information (herein also called data) may include what was seen, heard, or understood by the author-operator. Sources of information may include detectors of any of the incident information discussed above.

Recordings from these sources of information, unfortunately, may not capture all of what was seen, heard, or sensed by the author-operator and/or unambiguously show how the author-operator would interpret what happened. Due to the frailties of human memory, the human author-operator in many cases has a diminishing ability over an extended period of time to recognize ambiguity in the recording and/or omissions from the recording and to supply information that would resolve the ambiguity or explain the omission.

To avoid such loss of memory and to improve the accuracy of incident reports, systems and methods of the present invention provide the author-operator a capability for reviewing and supplementing information recorded at the incident. In other words, systems and methods according to various aspects of the present invention may employ structures and operations that facilitate reviewing and supplementing recorded information with additional information that is generally recorded at a time soon after the initial incident recording is made. The result of supplementing is also referred to herein as a revision. As a consequence of making a revision, a more complete and more accurate incident report result.

As discussed herein, recording and supplemental recording may be accomplished with any suitable recording technology or combination of sensing, detecting, formatting, communicating, and recording technologies. As used herein, a first presentation of audio and/or video content (herein also referred to as a movie) plays for a duration during which an operator may indicate an instance in time for addition of a second presentation that provides supplemental information regarding the first presentation. The first presentation may include a presentation of the incident at the time of original recording. The second presentation may be of relatively short duration and may include information from the first presentation (e.g., an except) or supplemental information from another source. The second presentation may be limited to a still photograph with no audio (e.g., a frame from the video of the first presentation), a short loop of one or a few moments (e.g., a scene, one or more frames from video of the first presentation). The short duration may be long enough for the operator to perceive from the excerpt of the first presentation some of the audio (e.g., a gunshot, a few words) and some of the motion (e.g., a glance, a facial expression) of the first presentation. Any other form of incident information (e.g., audio, documents) may constitute, by way of analogy to video information, a movie and/or a scene and may be supplemented by the author-operator.

In a preferred implementation, recording of an incident and recording of supplemental information produces information that is stored, reviewed, revised (e.g., supplemented), and communicated in accordance with "Coding of Moving Pictures and Audio", an ISO/IEC standard, known as MPEG-4. Information recalled from these containers may be used to compose scenes, movies, descriptions, and supplemental information for presentations as discussed herein.

Systems for collecting and managing evidence, according to various aspects of the present invention include subsystems generally used at the time and place of the incident (herein called primary subsystems) and other subsystems that are generally used not at the time or place of the incident (herein called secondary subsystems). These subsystems cooperate as a system for collecting and managing evidence.

Cooperative functions include functions performed by both primary and secondary subsystems in cooperation. Cooperative functions include identifying the author-operators of primary subsystems before evidence is collected, arranging for primary subsystems to cooperate before, during, and/or after incidents, and transferring collected evidence from the primary subsystems to the secondary subsystems.

Primary subsystems may perform any one or more of the following functions in any suitable combination: launching and/or deploying a force (lethal or less lethal) to a suspect to attempt to discontinue the present behavior of a person or animal (herein called a target), stimulating the target with an electrical current through tissue of the target to interfere with voluntary use by the target of its skeletal muscles (herein called electrical stimulation), logging events related to launching and/or stimulating, detecting for collecting evidence, recording for collecting evidence, revising recorded evidence, communicating among components identified to the same operator (herein also called a personal primary subsystem), communicating among primary subsystems, communicating between a primary subsystem and a secondary subsystem, storing the identity of the operator, storing addresses for communication, receiving software and data from a secondary subsystem, and transmitting status, data, and evidence to a secondary subsystem.

Some primary subsystems may have a central function or be of a type that contributes to a unique name for the primary subsystem (e.g., launcher, projectile, stimulator, data logger, detector, collector, recorder, display, editor, transceiver, hub, store, identifier, reporter). However, combinations of primary subsystems in a system for collecting and managing evidence may not be amenable to a single name (e.g., combination launcher-stimulator-data logger, combination recorder-editor-transceiver-reporter). Consequently, the term primary subsystem is used herein to describe an apparatus that implements any one function and any apparatus that implements any combination of functions.

A primary subsystem may be packaged in several units (e.g., products individually sold or handled) (herein called components) that cooperate by wired or wireless links to participate in performing the set of functions of the primary subsystem. A component may be capable of operation for some functions without communication as part of the primary subsystem (e.g., providing a device identification to a device identification detector).

Secondary subsystems may perform any one or more of the following functions in any suitable combination: preparing components of primary subsystems for reassignment and reuse, detecting the identification of a person to be assigned the role of an operator for one or more components of a personal primary subsystem, detecting the identification of components to be part of a personal primary subsystem, transmitting identification information to components of a personal primary subsystem, detecting the identification of additional primary subsystems and associating with each additional primary subsystem an operator identification and/or a personal primary subsystem identification, transmitting identification information to the additional primary subsystems, determining the identification of a primary subsystem for the purpose of receiving evidence from it, receiving evidence, storing evidence, and managing evidence. Suitable groups of these functions may be part of a general provisioning process that includes check-out, and check-in of persons, components, primary subsystems, and incident reports.

Communication, according to various aspects of the present invention, includes communication between the components of a personal primary subsystem, between primary subsystems, and between primary subsystems and secondary subsystems. Communication between subsystems or components of subsystems is discussed herein with reference to a link. A link generally includes a channel and protocol suitable for the information being communicated. The channel may have frequency and/or timing criteria for receiving and/or transmitting. The channel may be wired or wireless. A dedicated wired channel may include receiving without an address and/or transmitting at any time. A shared wired channel may employ channels and protocols similar to a wireless channel. A wireless channel may be dedicated and if so, communication may be analogous to a dedicated wired channel. Otherwise, the protocol organizes competition for use of the channel for transmitting and receiving only according to an address.

A subsystem may respond to one address or to several addresses. An address may be used to uniquely identify a primary subsystem. An address may be use to control a function of a primary subsystem.

An address may be unique to one subsystem or general (e.g., group addressing) to several subsystems or to all subsystems. Addressing may include group addresses for example for anonymous transmitting and/or simultaneous receiving of a broadcast to several subsystems. A transmitting protocol may permit transmitting at a random time (e.g., beacon), at a random time after receiving (e.g., polled), at a prescribed time (e.g., dedicated slot), and/or at a prescribed time after receiving (e.g., assigned slot). A transmitter of a first subsystem may transmit and a receiver of a second subsystem may receive a command to stop transmitting by the second subsystem for an arbitrary or a predetermined period of time.

An operator may collect evidence single-handedly using his or her personal primary subsystem. For example, an operator may navigate a route and record the status of equipment and security mechanisms such as locked doors and appropriate lighting.

Operators may attend incidents together and collect evidence in teams. Each team member generally operates his or her personal primary subsystem that may be identified to a suitable extent for operation by or coordination with other primary subsystems. For example, each team member may have a weapon (e.g., primary subsystems) for electrical stimulation of a target as discussed above. Each team member controls operation of their personal weapon; however, each weapon may associate to the weapons of the other team members to enable any team member to control the stimulation provided by any other team member's weapon.

A primary subsystem that logs events and/or detects incident information and further communicates directly or indirectly with a secondary subsystem is herein called a data source. A data source in various implementations may also record incident information, revise incident information, communicate between components of the data source using wired or wireless links, and/or communicate with another primary subsystem.

A data source may be located permanently at a likely location of an incident (e.g., a security camera, an entrance interview microphone, a document scanner, an access control system) and may communicate as discussed above (e.g., via a wired network among data source components). Typical data sources for law enforcement include red light and excess speed traffic monitoring systems. Data sources related to facility security may include badge readers, video surveillance, audio surveillance, biometric identification systems, and detectors of ambient conditions and changes in ambient conditions. For example, ambient conditions may include temperature, vibration, audible and visible indications of status quo in an environment subject to surveillance.

Changes in ambient conditions may include indications of entry by a person or animal trespassing, passersby, and any disruption of normal operation of equipment in the facility or surrounding area. Equipment being monitored by a data source may provide measurements and/or status reporting. A data source adapted to receive information from equipment may receive such information by monitoring observable equipment conditions and electrical communication to and from the equipment. For example, operation of an elevator in the vicinity of an incident may be observed or the signals that operate the elevator may be detected.

Data sources may be brought to the location of an incident by victims, witnesses, accomplices, suspects, and/or law enforcement personnel. Data sources may be overt or covert. Such equipment may include police patrol car on-dash video and audio systems, audio and video equipment worn by a person, cellular telephones with still image and/or video recording capability, and conventional crime scene investigation equipment (e.g., forensic data gathering measurement and analysis systems).

A primary subsystem that stimulates tissue of a target and/or launches or deploys a force toward a target is herein called an electrical stimulation device or electronic control device (ECD). An ECD may further include a data source having any suitable combination of capabilities identified above to a data source. Weapons (e.g., ECDs) may be either fixed or portable. Fixed weaponry may include turret-mounted weapons attached to facilities or vehicles and/or land mines. Portable weaponry may include handguns, rifles, batons, grenades, missiles, electronic control devices, and electrified projectiles (e.g., electronic control devices and electrified projectiles as manufactured, for example, by TASER International, Inc. as models M26, X26, and XREP, the published specifications and user manuals for which are hereby incorporated by this reference without limitation of the present context).

For example, a primary subsystem comprising a weapon and a data source may include a laser target designator or sight, an illuminator to illuminate the target, a video recorder aimed at the target, a microphone aimed at the target, an electrical stimulation circuit, projectiles, and a propellant for deploying projectiles for the electrical stimulation. Such a primary subsystem may be referred to as a weapon due to its central function of providing a force. The primary subsystem may transmit status signals and/or log its status and usage information (e.g., store time stamped event records). Consequently, the primary subsystem may transmit and/or record audio of ambient conditions, speech of the target, speech of witnesses and/or weapon operator, and/or video of the target. The primary subsystem may record and/or transmit still photographs. The primary subsystem may record and/or transmit streaming video. For example, video may begin at a time tens of seconds before operation of a trigger of the weapon and extending tens of seconds or a few minutes after operation of the trigger.

A primary subsystem may record and/or transmit the location of the incident. A primary subsystem may detect the Earth's magnetic field (e.g., azimuth), including compass bearing information in or associated with audio and/or video recordings. A primary subsystem may detect orientation in linear or polar coordinate systems (e.g., pitch, roll, velocity, acceleration, momentum, angular momentum). Location may be determined by a detector of the primary subsystem using a global positioning system (GPS) receiver. A GPS receiver may be incorporated in a primary subsystem (e.g., a data source, a combined weapon and data source). A primary subsystem may include range finding capabilities to detect a distance between the primary subsystem and the location of an incident (e.g., range finder). A primary subsystem may perform a calculation to determine the location of an incident.

A data source may be used for scanning, detecting signals, and for accessing documents, as discussed above. Scanning, detecting, and/or accessing may be for the purpose of including relevant information in an incident report. For example, the contents of a person's wallet may be scanned by a data source for collection of identifying materials. Paperwork related to licensing of a facility or operation of a vehicle may be scanned. The audio and video portion of a telephone or internet communication may be captured. Email, text messages, and audio messages played back from a telephone answering machine may be captured by a data source.

A primary subsystem may include a detector, a recorder, a transceiver, and a user interface for reviewing and revising an incident report. A detector may detect any ambient condition: video, audio, communicated information (e.g., eavesdropping), and/or scanned information. A video detector may include a video camera oriented by the author-operator for recording what is in the field of view of the author-operator.

A primary subsystem may format detected information for the purpose of forming recorded media and/or for communicating recorded information. Preferably, detected information is formatted for supplementing an incident report by the author-operator of the data source (e.g., via MPEG-4 format).

A transceiver may receive detected information from a detector for communication in real time. A recorder may supply recorded and/or revised information to the transceiver for communication via a link to other primary subsystems (e.g., for review and revision by a team member) and/or a secondary subsystem. The transceiver may include any conventional radio, telephone, or digital network transceiver. In one implementation, the transceiver supports a link to an ad hoc network for communication with primary and/or secondary subsystems. A user interface may facilitate preparing and/or revising an incident report from the information recorded by the recorder.

A user interface may include a display and controls adjacent to the display. A display may provide legends arranged along an edge of the display. User-operated switches may be arranged along the edge of the display and be identified for the purpose described by the legends. Requested information may include true/false or multiple choice prompts. A reply to such a prompt may be made by the operator by operating a switch on the edge of the display, a voice response by the operator, or operation of a pointer control that is part of the user interface.

A primary subsystem may interact with a human source to detect information. For example, a primary subsystem may interact with the author-operator of the primary subsystem. Interaction may include the presentation of questions, suggestions, or requests for narrative. The user interface may present information to the author-operator visually (e.g., on a display) and/or in audio form (e.g., Interactive Voice Response ("IVR")). The author-operator may respond via the user interface (e.g., operating controls, giving audio and/or video replies) to provide the requested information. Requested information may be organized as a hierarchy of diagnostics. Each diagnostic may be a request for information, a question (e.g., multiple choice or true/false, or a request for specific name, date, age), or a request to confirm information. The sequence of diagnostics may be predetermined by the primary subsystem. A primary subsystem may interpret an answer provided by an author-operator and determine whether to present another hierarchy and/or sub-hierarchy of diagnostics. The interaction with the operator of a data source may, therefore, be guided by prompts provided by the primary subsystem. The prompts may differ depending on the type of incident being reported, the type of primary subsystem, and/or answers by the operator. Diagnostic hierarchies in one implementation include IVR scripts.

A secondary subsystem includes any computer system (e.g., personal computer, server, network of servers) that receives data from one or more primary subsystems and stores, manipulates, or reports the data as evidence. A secondary subsystem may receive data as an incident report. A secondary subsystem may store, select, decompose, classify, sort, combine, compare, analyze, adjust, organize, and/or control access to incident reports. A secondary subsystem may comprise a hierarchy of components.

Methods, according to various aspects of the present invention, increase the likelihood that the incident report is complete, accurate, corroborated, verifiable, accessible, integrated with other sources of information, and reliably stored for use as evidence. These functions and advantages may be obtained by virtue of the variety of elements of an incident report (e.g., sounds, movies, forms, text, graphics, signals, documents, scans) and the capability of revising a scene based on any or all of these by the author-operator of the primary subsystem. Each element of incident information in an incident report or revision may be raw or derivative (e.g., presenting valuable selection and organization of clippings, croppings, enhancements, supplemental information, cross-correlations, sequences, sets, chronologies, related opinions, proofs, syllogisms, predictors of outcomes, and logical outcomes).

Generally, two elements of an incident report are associated logically or physically. Two or more elements may be associated. The association may be physical, for example, when reference to elements or the elements themselves are stored in the same physical record. Association may be logical, for example, when a query for records that meet a given relationship produces a report indicating that the relationship holds for the reported elements. An association in the terminology used for database management may be called a tuple. According to various aspects of the present invention, tuples of information provide the solutions to problems and benefits described above. For instance, an incident report may include a tuple of weapon usage information, video information, and responses gathered during an interview with a human source of information.

For instance, a video clip may be associated with a date and time of a trigger pull of a weapon (e.g., an electronic control device), and an audio description of the behavior of the target (e.g., a human suspect or animal) as provided by a law enforcement officer in response to a prompt to describe the target. As another example, an audio clip may be substituted for the video clip in the previous example. Still another example, a video clip may be associated with an audio supplementary description and a response by an officer describing the behavior of the target. As discussed above, video information, weapon information, and interview responses may be associated in a single primary subsystem, in a primary subsystem operating as a hub or master of primary subsystems reporting to the secondary subsystem, or in a secondary subsystem that receives from individual primary subsystem the individual data items prior to identifying an association. The basis for association may be an incident identifier or a consequence of concurrent acquisition of the data at the primary subsystems.

Data structures, according to various aspects of the present invention, may implement tuples, as described above. A data structure may be stored as a record of a database. A data structure may exist temporarily in memory referred to by a process performed by a work flow processor. A data structure may include the tuple of elements and other data. The tuple of elements may include, for example, meta-data, time of day, officer identification, weapon identification, identification of other individuals or animals appearing or observable from the audio and/or video data, identification of the camera used to record video, identification of the audio of the microphone used to collect the audio information, identification of the weapon and its configuration which provides weapon usage information, as well as preliminary results of statistical analysis. Preliminary results may include conclusions as to applicable weapon usage policies, applicable guidelines for data collection or for weapon usage, meta-data, index ordinals, description of location, descriptions of jurisdiction, and other information that applies to the incident though may not have been readily available in real time or recorded during the period of time covered by the incident.

Data transferred to a secondary subsystem, according to various aspects of the present invention, includes revisions made by an author-operator of the primary subsystem.

Revisions may improve the emphasis or clarity of an incident report. Video images may be cropped, panned, and/or zoomed. Movies may be clipped. Photographs may be cropped and/or scaled. Audio streams may be clipped. Printed information may be amended or partially rewritten for clarity. Supplemental information may be provided by the author-operator regarding the original recording. All of these revisions may occur at the primary subsystem by operation of a user interface. The time (e.g., time of day, date) of making a revision may also be recorded. The original recordings are preferably retained and the revisions incorporated in a new version of the incident report.

An incident may initially be identified by a date and period of time during which the incident and/or investigation of the incident occurred. Any conventional identification may also be used. Each primary subsystem may be made aware of the incident identifier. For example, primary subsystems with reasonably synchronized date/time clocks may simply add date/time stamps to the information they provide. Primary subsystems having a user interface may accept a user-defined incident identifier from an author-operator.

An incident report may be supplemented with a report of all time keeping devices used at the incident and recorded in incident reports. The report of all time keeping devices may be made at one instant of time for comparing relative time discrepancies. The report may be made at several times where each device is compared to a reliable time base. Devices that lack electronic communications may include suitable user interface prompts, controls, or recordings. For example, a primary subsystem may provide a prompt that asks the author-operator to audible recite the time of day as provided by his or her wristwatch.

For indirect transfer of data from a primary subsystem, the primary subsystem may include removable memory (e.g., semiconductor memory, magnetic tape or disk, optical media). A secondary subsystem may include a suitable reader for removable memory. A primary subsystem may include a wired or wireless communication capability for direct transfer of data from removable or non-removable memory to a secondary subsystem. For example, a system for evidence transfer and management may include a docking station and/or a transceiver for receiving data from a primary subsystem.

Evidence management may include validation of data received from a primary subsystem (e.g., incident reports and revised incident reports), making further revisions (e.g., creating derivative incident reports), combining portions of two or more incident reports, and comparing incident reports. Any data format may be used for transfer into a secondary subsystem. Any data format may be used for storing data in a secondary subsystem. Particular synergies are realized, according to various aspects of the present invention, when only a few, or one, data format is used for all data transfer and storage functions of the secondary subsystem. Preferably, both transfer and storage use a format having most if not all of the structures and functions of MPEG-4. Combining may be accomplished, for example using MPEG-4 objects, descriptions, and metadata, by including in a revision objects, descriptions, and/or metadata that originate from more than one primary subsystem.

The functions of a secondary subsystem as discussed above may be arranged for convenient use by diverse personnel responsible for different portions of collecting and managing evidence. All functions related to primary subsystems and their operators may be accomplished at a first location and all other functions (e.g., evidence storage and analysis) may be accomplished at a second location.

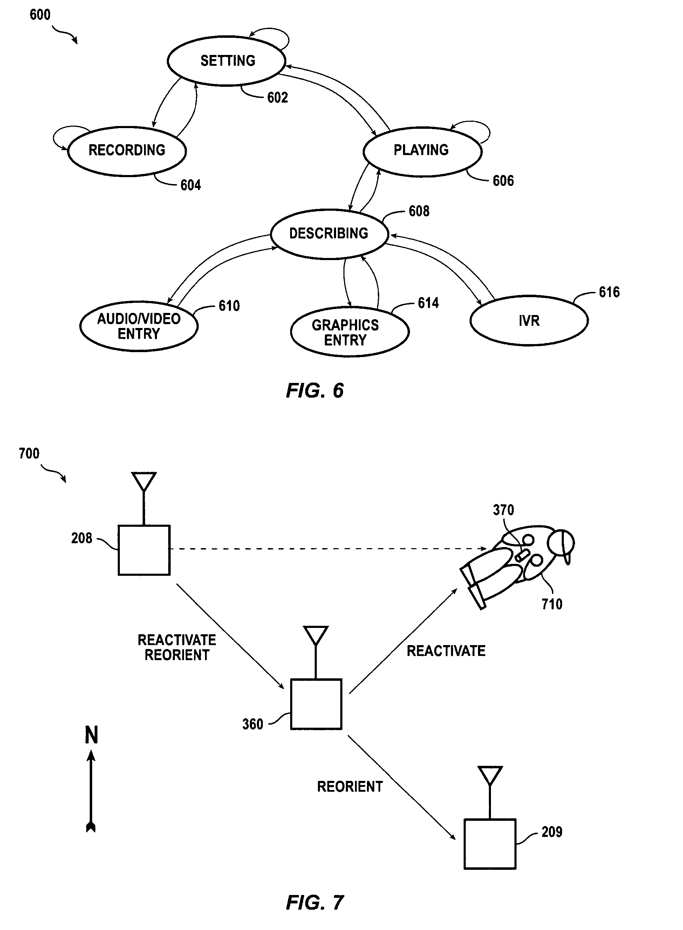

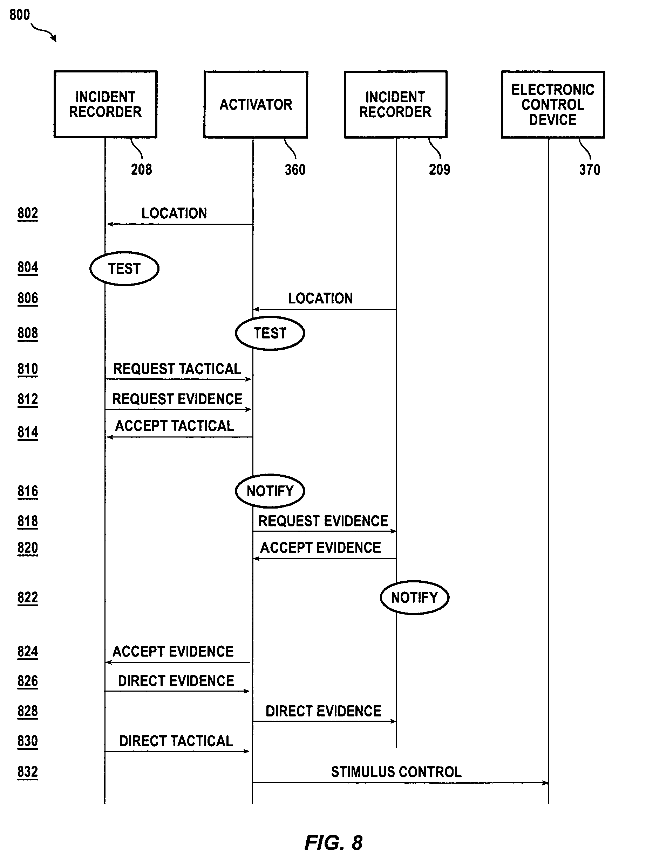

For example, a system for collecting and managing evidence may include any number of station hubs coupled by a network to any number of shift hubs. A station hub provides secure operation of an evidence manager. A network supports data and inter-process communication. Any conventional protocol may be used (e.g., an Internet or intranet protocol stack). A shift hub provides data transfer from a primary subsystem (e.g., incident records and revisions) and may further provide physical storage (e.g., off-shift secure storage for personal items or items controlled by an armory), recharging of rechargeable batteries, and/or data transfer to the primary subsystem (e.g., software upgrades, information regarding tactical tasks, evidence collection tasks, and communication tasks discussed below with reference to FIGs. 7 and 8).

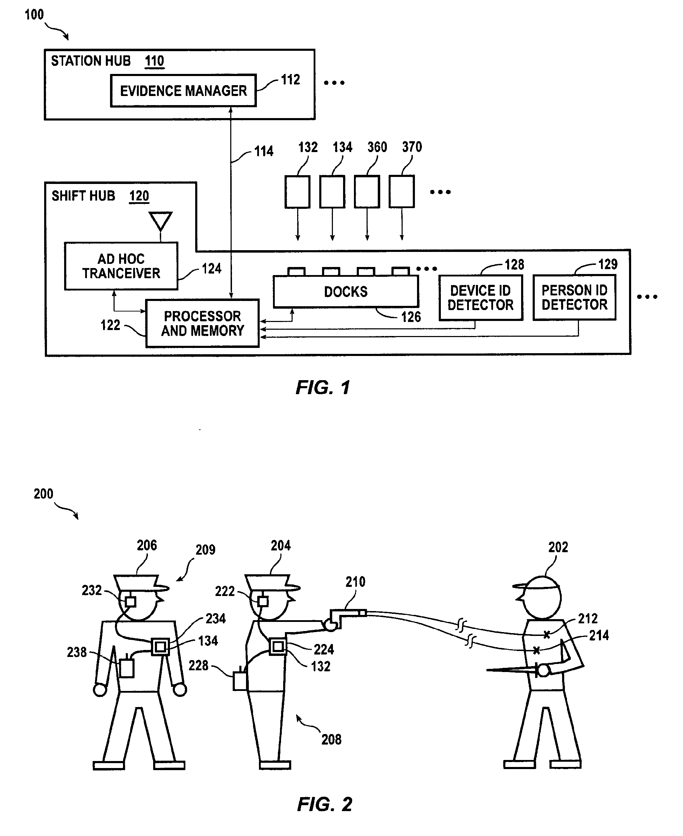

For example, a system for collecting and managing evidence 100 of FIG. 1 includes station hub 110 coupled by network 114 to shift hub 120. Station hub 110 hosts evidence manager 112 (e.g., a database manager adapted in a conventional manner for managing evidence as discussed herein). Hosting includes a conventional secure computing environment (e.g., physical security, communication security, access controls, encryption). Network 114 provides secure communication between any number of station hubs 110 and shift hubs 120. Shift hub 120 includes a processor 122, an ad hoc transceiver 124 for wireless communication with any suitable number of primary subsystems equipped for wireless data transfer, docks 126 for wired connection to any suitable number of primary subsystems, a device identification detector 128, and a person identification detector 129.

Processor 122 via ad hoc transceiver 124 and/or docks 126 may poll primary subsystems and/or components that are within range for maintaining among them an ad hoc network based on one or more suitable communication channels (e.g., conventional IR, radio, or wireless network channels) and using one or more suitable communication protocols (e.g., conventional IEEE 802). Such a network is "ad hoc" because candidates of the network may enter and members of the network may exit (e.g., moved by humans) the zone of communication without advance notice to processor 122. Processor 122 detects entry and exit of a primary subsystem and/or component from the ad hoc network and maintains the ad hoc network with as many members as practical for the capability of processor 122.

An ad hoc transceiver may participate in different ad hoc networks at different times. For instance, an ad hoc transceiver not at an incident may join an ad hoc network for transfer of incident reports to a secondary system (e.g., 132 in FIG. 1). The ad hoc transceiver may, at another time, join an ad hoc network for recording incident information (e.g., 132 in FIG. 2). The ad hoc transceiver may, an another time, join an ad hoc network for directing tasks to other primary subsystems (e.g., 360 and 209 of FIG. 7). In other implementations different transceivers may be used for some or all of these types of communications to accommodate differences in channels and/or protocols.

A device identification detector detects an identification of a component to a primary subsystem or of an entire primary subsystem (e.g., a personal primary subsystem). For example, on check-in to shift hub 120 (e.g., via docking or local ad hoc communication), device identification detector 128 identifies the components or primary systems and associates the detected identities to the incident reports transferred from the components or primary systems to shift hub 120. Identification and association provides evidence validation. On check-out from shift hub 120 (e.g., via undocking or removal from local ad hoc communication), device identification detector 128 identifies components to the primary subsystems (e.g., in the same or another component) so that incident reports are recorded in association with that component's identification, again for purposes of evidence validation.

A person identification detector detects an identification of a person associated or to be associated with a primary subsystem. For example, on check-in to shift hub 120 of a primary subsystem, the person that plugs suitable components of the primary subsystem into docks 126 may be identified by person identification detector 129 for association to the incident reports transferred from the primary subsystem for purposes of evidence validation. On check-out from shift hub 120 of a primary subsystem from docks 126, the person that removes components of a primary subsystem from docks 126 may be identified to the primary subsystem so that incident reports are recorded in association with that person's identification, again for purposes of evidence validation.

As discussed below with reference to FIGs. 7 and 8, activators 360 and electronic control devices 370 may be plugged into docks 126 or communicate via ad hoc transceiver 124 to exchange addresses for addressable stimulus control. Processor 122 may read such addresses stored in a first activator and write those addresses into a second activator. Processor 122 may receive addresses for stimulus control via network 114.

Device identification detector 128 may detect an identification for obtaining addresses for addressable stimulus control, discussed below with reference to FIGs. 7 and 8. For example, weapons that respond to signals for addressable stimulus control (e.g., electrified projectiles) may be identified to identification detector 128 by bar codes, glyphs, or radio frequency identification (RFID) technologies. The weapon identification may directly or indirectly determine addresses needed for transfer into an activator. As another example, persons (e.g., operators) intended to use an activator with particular weapons that respond to signals for addressable stimulus control may be identified to person identification detector 129 in any conventional manner (e.g., badge reader, biometric detection). Addresses for stimulus control may be associated with an intended operator identification.

The association of an intended operator identification with one or more such addresses may be accomplished by a user interface of shift hub 120 (not shown) or by a user interface coupled to network 114 (not shown) for example used by an armory when dispensing electrified projectiles having addresses for stimulus control. The armory may specify addresses for stimulus control of those electrified projectiles being dispensed in association with an identification of an activator and/or in association with an identification of a person chosen to use an activator. As part of check-out of an activator to an identified person, the activator may receive addresses for controlling a specific weapon (e.g., electrified projectile) or a group of weapons and the activator may receive the identification of the person authorized to control the activator and thereby the weapons.

Docks 126 accept, by plug-in to a wired network, any suitable number of primary subsystems and/or components thereof. Docks may also provide a location (e.g., a bin) within range of ad hoc transceiver 124 for communication between processor 122 via transceiver 124 and any number of primary subsystems and/or components thereof placed at the location (e.g., in the bin). The location may be suitable for detecting device identification by device identification detector 128. For example, hand sets 132 and 134, activator 360 and ECDs 210 may be plugged into docks 126. Head sets 222 and 232, personal hubs 224 and 234, and ECD projectiles 370 may be located in a bin (not shown) for scanning and/or programming by device identification detector 128.

Docks 126 locates and/or links for communication components and primary subsystems for data transfer to secondary subsystem 110 as coordinated by processor 122 and evidence manager 112. Data transfer may include incident reports and/or usage logs. If other components and/or primary subsystems are nearby but not plugged into docks 126, data transfer may occur via ad hoc transceiver 124 as controlled by processor 122 for communication with those other components and primary subsystems.

Components and primary subsystems may be recharged via docks 126. For example, hand sets 132 and 134, activator 360 and ECD 370 may be plugged into docks 126 for recharging of their internal batteries as controlled by processor 122. Processor 122 may notify an operator of system 100 of undocked components and primary subsystems that may benefit from docking (e.g., higher reliable data transfer rate, recharging).

Each primary subsystem (e.g., hand set, activator, ECD projectile) that cooperates with shift hub 120 may receive from shift hub 120 data identifying an intended operator for the primary subsystem (e.g., from person identification detector 129). Identification of the intended operator may then be added to data recorded by the author-operator of the primary subsystem for purposes of laying a foundation for the incident record as evidence. Any or all components of a primary subsystem may be identified to any or all of the other components of the primary subsystem (e.g., using a unique primary subsystem identifier and/or a unique ad hoc address for the primary subsystem).

The functions of a shift hub may be reduced to cooperate with another secondary subsystem component (not shown) herein called a locker dock. For example, the reduced shift hub includes one or more ad hoc transceivers 124, and processor 122 and omits docks 126, device identification detector 128, and person identification detector 129. Numerous locker docks (not shown) are connected by network 114 to one or more reduced shift hubs. Each reduced shift hub connects by network 114 to station hub 110. Each locker dock is located in an identified person's locker generally used for personal effects when the person is on duty. In another implementation, the locker dock includes processor 122, docks 126, and device identification detector 128. Those devices that cannot be identified by plugging into docks 126 are identified by device identification detector 128.

A device identification detector may scan (e.g., optical reader, magnetic reader) or receive (e.g., radio link, IR link) from a device an identification of the identification of that device. A device identification detector may change or supplement the identification of a device. For example, the device identification may be replaced, added to, or revised by any manner suitable for human and machine readable identification (e.g., mark, print, erase, magnetize, re-magnetize, transmit into). The identification from or to the device may include a unique address, a group address, or any combination of one or more of these addresses.

A hypothetical incident and application of systems and methods according to various aspects of the present invention is illustrated in FIG. 2. FIG. 2 is a pictorial representation of a hypothetical incident involving two law enforcement officers 206 and 204 apprehending a suspect 202 while each officer operates a respective primary subsystem, herein called a system for incident recording 208 and 209 (herein also called an incident recorder), according to various aspects of the present invention. Officer 204 operates an electronic control device 210 (e.g., a TASER International model M26 or X26) that deploys two wire-tethered electrodes that hit the suspect 202 at contact points 212 and 214. Current generated by the electronic control device flows through the wires, electrodes, and tissue of the suspect to cause involuntary muscle contractions, halting locomotion by the suspect and facilitating arrest of the suspect. Incident recorder 208 worn by officer 204 records a movie (e.g., audio and video) during the confrontation. System for incident recording 209 worn by officer 206 also records a movie during the confrontation from a different point of view. In this example, systems 208 and 209 are identical; each includes a head set 222 (232), personal hub 224 (234), hand set 132 (134), and on-duty transceiver 228 (238). Each headset 222 (232) includes a camera and microphone oriented away from the officer toward the field of view of the officer's eyes. Soon after suspect 202 is arrested (e.g., hand cuffed, shackled, confined), officer 204 (206) may independently review the movie that was recorded and add supplemental descriptions to any scenes.

Reviewing is accomplished by removing the hand set from the personal hub and watching a movie on the display of the hand set. Adding a description is accomplished, among other things, by identifying a scene, and adding audio (e.g., talking about the scene into a microphone of the head set or personal hub), adding video (e.g., removing the camera from the headset and orienting it toward anything of interest), and/or adding graphical information (e.g., describing in a standardized way where on the body of the suspect contact points 212 and 214 occurred). While the hand set is apart from the personal hub, the officer may use a microphone and speaker of the personal hub for communication via the on-duty transceiver, for example to a dispatch agent.

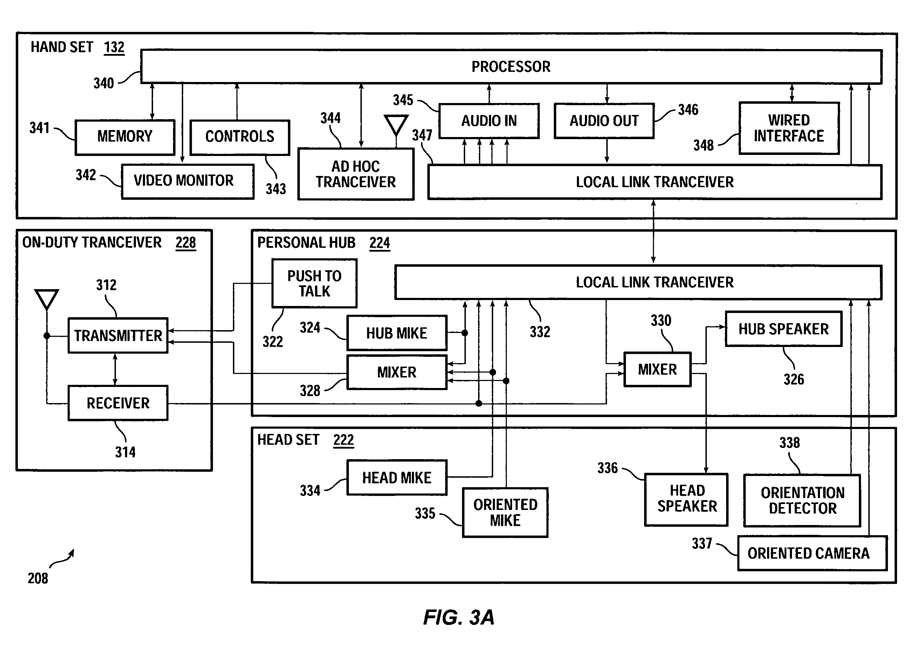

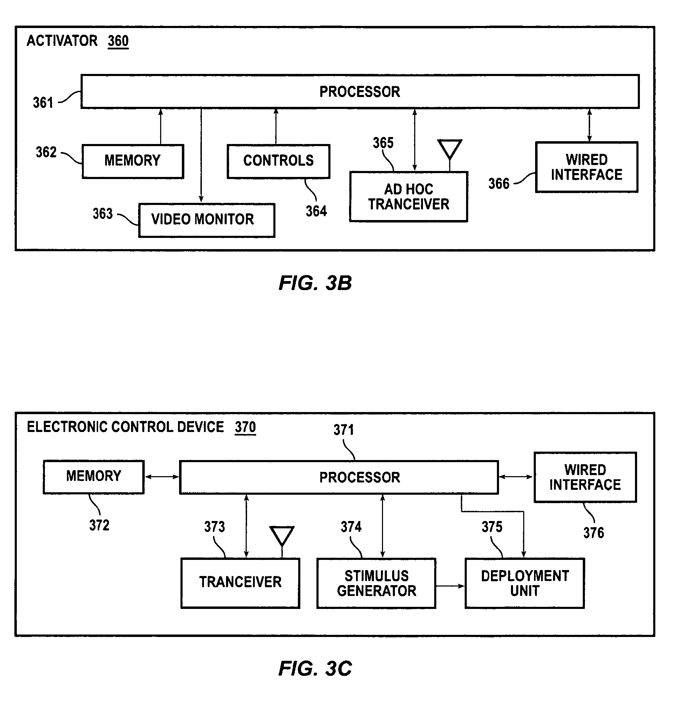

In an implementation, a system for incident recording (herein also called a primary subsystem, a personal primary subsystem, or an incident recorder) 208 of FIG. 3 includes hand set 132, on-duty transceiver 228, personal hub 224, and head set 222. Handset 132 includes processor 340, memory 341, video monitor (herein also called a display) 342, controls 343, ad hoc transceiver 344, audio in circuit 345, audio out circuit 346, local link transceiver 347, and wired interface 348. On-duty transceiver 228 includes transmitter 312 and receiver 314. Personal hub 224 includes push-to-talk circuit 322, hub microphone 324, hub speaker 326, mixer 328, mixer 330, and local link transceiver 332. Head set 222 includes head microphone 334, head speaker 336, oriented microphone 335, oriented camera 337, and orientation detector 338. The functions and functional cooperation of these components are discussed below.

A hand set, according to various aspects of the present invention, provides a display and provides controls sized and positioned for operation by a user's fingers and/or thumbs. A hand set operates to supplement recorded information (herein also referred to as a movie) with a description determined (e.g., created, defined, selected, specified) by the user. A description (herein also referred to as a supplement, supplemental information, and/or a revision) may include additional video information, audio information, graphics information, text, status, logs, measurements, calculations, documents, and/or data.

A hand set may further include the structures and perform the functions of a data source as described herein. A hand set may record information. A hand set may receive information to be recorded by the hand set. A hand set may communicate recorded information and/or supplemental recorded information to other portions of an incident recorder and/or to a system for evidence transfer and management system. For example, hand set 132 receives from personal hub 224 signals that convey audio and video information and records the audio and video information in MPEG-4 format in memory 341. In another implementation, personal hub 224 and on-duty transceiver 228 are omitted and hand set 132 cooperates directly with head set 222 through a wired or wireless interface. In another implementation, head set 222 is omitted and hand set 132 includes a microphone and speaker for use by the author-operator of the hand set and an oriented microphone and oriented camera that are oriented by the author-operator of the hand set.

An on-duty transceiver provides inter-personal communication. An on-duty transceiver may provide coordinated communication among persons working together to collect evidence. An on-duty transceiver may support coordinated communication among persons for surveillance and security, law enforcement, and/or military operations. Communication may be in any suitable conventional form. An on-duty transceiver may provide 2-way half duplex audio communication via radio. In another implementation, an on-duty transceiver provides in addition to radio or in place of radio, full duplex cellular telephone communication. In another implementation, an on-duty transceiver provides audio and or video communication via wireless computer network technologies. For example, on-duty transceiver 228 includes 2-way half duplex audio communication via radio on dedicated emergency response and police channels.

A personal hub, according to various aspects of the present invention, couples one or more of an on-duty transceiver, a head set, and a hand set. A personal hub may cooperate with an on-duty transceiver to provide audio input and output transducers located for convenience near the author-operator's mouth and ears. A personal hub may include a wired interface or a wireless interface to a head set. A personal hub may provide a wired interface or a wireless interface to a hand set. For example, personal hub 224 provides a wired interface to on-duty transceiver 228, provides a push-to-talk switch for use with on-duty transceiver 228, supports a microphone and speaker in the personal hub for use with on-duty transceiver 228, provides a wired interface to head set 222, and provides a wireless interface to hand set 132. In another implementation, personal hub 224 includes one or more detectors and/or one or more recorders as discussed above with reference to a data source.

A head set is adapted to couple to a head of an author-operator. A head set, according to various aspects of the present invention, supports visual, audio, and orientation detectors. An orientation detector detects an orientation (e.g., azimuth, elevation) of the head set. A predetermined positioning between the head set and the author-operator's head (e.g., front of head set positioned forward) implies that the orientation detector may detect an orientation of the author-operator's senses (e.g., direction of orientation of eyes, ears, nose, mouth). An orientation detector may include electrical, electronic, and mechanical components and systems. An orientation detector may include mechanical devices formed using Micro-Electro-Mechanical Systems ("MEMS") manufacturing techniques for detecting acceleration or changes in orientation (e.g., gyroscopes). In one implementation, a head set includes an electronic compass for detecting an azimuth of orientation of the head set.

A detector may be oriented with respect to the head set and thus with respect to the author-operator's head. An oriented detector may include any device for detecting physical phenomena that is oriented (e.g., positioned) along a same general direction as a sense of the author-operator.

For example, a head set may include, as an oriented detector, a microphone for detecting sound. The microphone may be oriented in a direction of hearing of the author-operator. A head set may include, as an oriented detector, a camera for detecting radiant energy in any suitable channel or spectrum in a direction of sight of the author-operator. A head set may include, as an oriented detector, a chemical detector positioned for detecting particles of any suitable type that may enter the olfactory gland and/or mouth of the author-operator.

A head set may include a source of radiant energy and a detector for detecting radiant energy from the source that is reflected towards the head set. A head set may include a laser for identifying a reference location and/or for use as a designator for orienting a data source and/or targeting weapons.

For example, head set 222 is designed to be worn on the head of a human operator. Head set 222 includes an oriented microphone and an oriented camera for continuously detecting audio and visual (or infrared) information from the direction facing the operator as the operator turns his or her face. Head set 222 includes an orientation detector for reporting to the hand set absolute or relative changes in orientation of the oriented microphone and oriented camera. Head set 222 further includes a microphone and a speaker located proximate to the mouth and ear of the human operator for review of recorded information and for receiving descriptions of recorded information from the author-operator.

A processor includes any circuitry or subsystem that performs a stored program. A processor may include a dedicated digital signal processor, a microcontroller, a microprocessor, an application specific integrated circuit, logic circuitry, MEMS device, signal conditioning circuitry, communication circuitry, a computer, a radio, a network appliance, combinations thereof in any quantity suitable for accomplishing one or more stored programs.

For example, processor 340 includes a digital signal processor for digitizing audio signals, a microcontroller for supporting video display and user interface controls, a digital signal processor for supporting an ad hoc transceiver, a network controller for supporting a wireless link to personal hub 224, and a microcomputer with operating system and application software for performing all other functions of hand set 132. In another implementation, greater signal processing throughput is supported with additional parallel processing circuits and technologies. In another implementation for a different data source application, fewer dedicated circuits are used in favor of one or a few general purpose processing circuits suitable for the throughput of the different detecting and recording functions of the different data source.

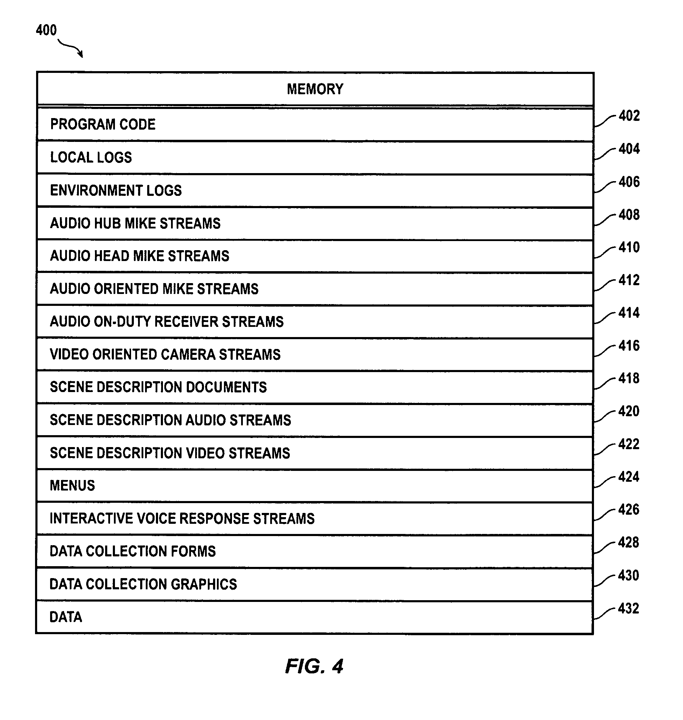

A memory includes any semiconductor, magnetic, or optical technology or combination for storing information. All or a portion of memory may be on removable media removed from hand set 132 for transferring data out of hand set 132 or for introducing data into hand set 132 (e.g., software upgrade, addresses for stimulus control, replacement information for any information described with reference to FIG. 4). For example, memory 341, stores information as described with reference to FIG. 4 using non-removable semiconductor technology. A portion of memory 341 may be maintained in nonvolatile memory to avoid data loss in the event of failure or removal of battery power to handset 132.

A video monitor provides a display. The display may present legends for controls of a user interface. The display may present video information for review. The display may present video information for determining a description. A video monitor may include a processor or circuitry for supporting the display. A video monitor may employ any display technology suitable for the environment where hand set 132 is used. In an implementation, video monitor 342 includes a conventional LCD display that presents video in shades of green for visibility outdoors. In another implementation, video monitor 342, or a monitor in addition to video monitor 342, is included in head set 222 and the correlation of legends on the display with controls of the user interface does not require the trained user to view his or her hands when operating the controls.

A control, according to various aspects of the present invention, is a part of a user interface that provides input to a processor in response to an action by an author-operator. A control may be operated as a consequence of any muscle contraction by the operator. A control may be incorporated into clothing worn by the operator (e.g., gloves, sleeves, shoes). A control may provide analog or binary information to a processor. A control may comprise a detector of a binary condition or a detector of an analog condition. A control may include a pointer control. A pointer control provides to the processor an indication of the operator's intent to have a pointer that is superimposed on a presentation of the display move in a particular direction to another point of the presentation. The pointer may be any symbol or icon. Directions may including up, down, left, right, and diagonal. Directions may further include arbitrary bearings from the current pointer position. A pointer control may further provide to the processor a binary indication of the operator's intent to have the processor "accept" or act with reference to that portion of the presentation that the pointer currently identifies.

For example, controls 343 include a first plurality of multipurpose binary switches arranged along an edge of the display of video monitor 342 and a conventional pointer control providing to the processor directions including up, down, left, right, diagonal, and "accept". The switches of controls 343 are sized and positioned on hand set 132 for operation by the operator's fingers and/or thumbs. The switches of controls 343 are also positioned to correlate with legends presented on the display of video monitor 342. Consequently, the functions of the plurality of switches may be defined and redefined by the processor within any suitable operating context, state, or modes of operation. Controls 343 may further include dedicated switches that when operated perform a dedicated function (e.g., a switch indicating a time of interest during recording, a switch operated to control the stimulus of any weapon, a switch to toggle recording on/off for author-operator privacy) and dedicated analog controls (e.g. display brightness, audio playback volume).

An ad hoc transceiver supports communication by a candidate for or a member of an ad hoc network. Any suitable communication technologies may be combined to implement an ad hoc transceiver limited to accomplish reliable performance in the presence of sources of noise and an expected number of candidates and members of the ad hoc network. Transmitting by candidates may be subject to garbling due to simultaneous transmissions on the same channel. Coordination of the transmissions of members may be accomplished using any suitable conventional protocol and/or channel assignment technique. An ad hoc transceiver may use any suitable secure communication technology. For example, ad hoc transceiver 344 provides relatively short range (less than 5000 meters) communication at relatively low power (e.g., less than one milliwatt) in frequency channels between 700 and 1200 MHz. Transmissions by members employ spread spectrum techniques.

An audio in circuit provides audio information to a processor in a suitable signal format. Signal conditioning, analog to digital conversion, sampling, multiplexing, and/or filtering may be accomplished by an audio in circuit. For example, audio in circuit 345 provides to processor 340 audio information responsive to analog microphones including hub mike 324, receiver 314, head mike 334, and oriented mike 335. Conversion to MPEG-4 format may be accomplished by processor 340 and/or audio in circuit 345.

An audio out circuit receives audio information from a processor in a signal format suitable for communication and/or for conversion into sound. For example, audio out circuit 346 in cooperation with processor 340 converts audio information from MPEG-4 format to analog format for use by a conventional speaker (e.g., head speaker 336). In another implementation, audio in circuit 345, processor 340, and audio out circuit 346 cooperate to provide audio output for use with conventional noise cancellation technologies implemented at hub speaker 326 and or head speaker 336. In an implementation, additional microphones are co-located near speakers to provide additional signals to audio in circuit 345 and processor 340 for performing noise cancellation. Processor 340 and/or audio in 345 may include noise cancellation processing circuitry and/or software.

A local link transceiver provides point-to-point communication to one other local link transceiver. A local link transceiver may include multiplexing and demultiplexing for the communication of information of several formats. A local link transceiver may use any suitable secure communication technology. In an implementation, local link transceivers 347 and 332 cooperate to replace a wired interface between hand set 132 and personal hub 224 with a secure wireless interface.

A transceiver includes a transmitter and a receiver. When the transmitter and receiver share one communication channel, the transmitter and receiver cooperate to use one antenna. A transceiver may use any number of channels in sequence (e.g., for spread spectrum communication) or simultaneously (e.g., for acting as a network node performing repeating and routing functions for all messages received whether or not addressed for local processing). Transceivers 344, 347, 332, and 228 include transmitters and receivers. Transmitter 312 responds to push-to-talk circuit 322 of personal hub 224 and transmits information in response to mixer 328. Receiver 314 provides audio information to mixer 330.

As used herein, a signal conveys information. When a functional block is responsive to information, the circuitry implementing the functional block receives a signal that conveys the information and demodulates, or otherwise, determines the information for performance of a function of the block. Receiving may be continuous or discontinuous. Performing the function may occur whenever sufficient information is received.

Components (e.g., hand set 132, personal hub 224, head set 222, on-duty transceiver 228) of a primary subsystem (e.g., 208, 209) may each include respective device identification functions. A device identification function may be implemented in any conventional manner to identify the component of a primary subsystem to a shift hub as discussed above. The identification may be human readable as well as machine readable. If a component includes a user interface, the device identification may be entered, edited, augmented, or verified by the operator.

A push-to-talk circuit provides a transmit enable signal to a transmitter. A push-to-talk circuit may include a user interface with a conventional push-to-talk switch. An operator actuates a push-to-talk switch to begin transmitting. For example, push-to-talk circuit 322 includes a manual binary switch sized and positioned to be operated by one of the author-operator's thumbs. In another implementation, a conventional voice operated switch (VOX) replaces or cooperates with a push-to-talk switch.

Hub microphone 324 and hub speaker 326 pick up the operator's voice and play audio into the operator's ear respectively. Hub microphone 324 provides an analog signal conveying audio information to mixer 328 and to local link transceiver 332. Hub speaker 326 provides audible sound in response to a signal received from mixer 330. Hub microphone 324 and hub speaker 326 provide redundant functions with head microphone 334 and head speaker 336.

Mixer 328 receives audio information from hub mike 324, head mike 334, and oriented mike 335. In suitable relative volumes among these audio sources and at suitable times based on a priority of audio sources, mixer 328 provides audio information to transmitter 312.

Mixer 330 receives audio information from receiver 314 and audio out circuit 346 via local link transceivers 347 and 332. In suitable relative volumes among these audio sources and at suitable times based on a priority of audio sources, mixer 330 provides audio information to hub speaker 326 and head speaker 336.

Head microphone 334 and head speaker 336 pick up the operator's voice and play audio into the operator's ear respectively. Head microphone 334 provides an analog signal conveying audio information to mixer 328 and to local link transceiver 332. Head speaker 336 makes audible sound in response to a signal received from mixer 330. Due to the location on the operator's head, head microphone 334 and head speaker 336 may provide more private audio communication with an author-operator than possible with hub microphone 324 and hub speaker 326.

An oriented microphone moves with movement of the author-operator's head to receive sound that approaches the operator's face. An oriented camera moves with movement of the author-operator's head to capture radiant energy (e.g., ambient or illumination of visible or IR light) that approaches the operator's face. Consequently, as an author-operator performs his or her routine, audio and visual information captured for recording generally corresponds to the audio and visual information that reaches the author-operator's senses. Oriented mike 335 may have a relatively narrow field of sensitivity projected in front of the author-operator suitable for capturing speech intended for the author-operator to hear and respond to. Oriented camera 337 may have a relatively wide field of sensitivity to correspond more closely with the field of view of a human author-operator. Oriented microphone 335 may be implemented as an omni-directional microphone or stereo microphone and as such may not be "oriented" in the same manner that oriented camera 337 is oriented.

A head set may include other oriented detectors oriented to detect information that is not aligned with a direction of the senses or that may be undetectable by the senses of a human author-operator. As set forth above, an implementation may include a camera that detects infrared light that that cannot be directly detected by an unaided human eye. In another implementation, a camera may be oriented to detect information at the rear of the author-operator. An author-operator may also detach a detector from a primary subsystem for manual orientation and detection in any direction.

An orientation detector provides information regarding the orientation of oriented camera 337. An orientation detector may further provide information regarding the orientation of oriented microphone 335. An orientation detector may further provide information as to a geographic position of the author-operator (e.g., longitude and latitude coordinates from a GPS receiver). In other implementations, information as to position is determined for processor 340 by the location of a GPS receiver (not shown) in on-duty transceiver 228, personal hub 224, or hand set 132. Information regarding position and orientation includes azimuth (e.g., cardinal direction toward which the author-operator is facing) and elevation (e.g., whether the author-operator is facing perpendicular to gravity, looking up to an extent, or looking down to an extent).

Memory 341 includes data stored in any suitable organization and format. In one implementation, contents of memory 341 include data structures 400 as described below with reference to FIG. 4. Data may be organized for storage in a data structure of any conventional type including value, list, table of records, file, tree, graph, hierarchy of records, or hierarchy of tagged strings consistent with a markup language. Data in any organization and plural organizations may be stored in containers. The description of memory 341 shown in FIG. 4 is more akin to a functional block description than a data structure or container description. Nonetheless, the data stored in memory 341 and the manner in which it is accessed by processor 340 specifies the structure of memory 341.

Data structures 400 include program code 402, local logs 404, environment logs 406, audio hub mike streams 408, audio head mike streams 410, audio oriented mike streams 412, audio on-duty receiver streams 414, video oriented camera streams 416, scene description documents 418, scene description audio streams 420, scene description video streams 422, menus 424, interactive voice response streams 426, data collection forms 428, data collection graphics 430, and other data 432.

Program code 402 includes instructions performed by processor 340 to accomplish any methods and functions ascribed to processor 340 or hand set 132. Program code 402 includes operating systems for processor 340 and application software. Application software includes software for recording audio and video in MPEG-4 format, software for operating a user interface for a hand set as discussed herein, software for review of recorded information, software for determining revisions in MPEG-4 format, and software for communications.

For improved evidence gathering and transfer, application software may further include software for noise cancellation, video enhancement (e.g., stabilization, bounce removal, light level compensation), determination of position of the incident recorder (e.g., global position, dead reckoning), identification of the author-operator of the camera (e.g., during recording) and the hand set (e.g., during revising), identification of other components of the incident recorder (e.g., serial numbers, types, manufacturers), interactive voice response, transcription of speech to text, and 3D modeling for graphic presentations including data collection graphics.

Recorded audio and video may be stored for at least two purposes. A pre-movie buffer may retain continuously recorded audio and video information in a circular buffer (e.g., 60 seconds duration) so that when the operator indicates a time to begin recording a movie (e.g., operation of a control 343), audio and video from before the operator's indicated time is available, for example, to provide information as to why the user decided to begin recording the movie.

Any number of movies may be recorded, preferably one movie at a time. The end of each movie may be indicated by the author-operator by operation of any control 343 or by cooperation with interactive voice response after a lapse of a period of time. Controls 343 may include a dedicated switch for indicating an end of a movie. Menus may permit the user to actuate a general purpose switch to indicate the end of a movie.

An incident report may consist of a revised movie. An incident report may comprise a revised movie together with portions of logs, interactive voice response streams, data collection forms or overlays, data collection graphics or overlays whether or not any or all of this information is included in a revised movie. In a preferred implementation, a revised movie includes all relevant information including one or more movies, all scene descriptions, portions of logs, interactive voice response streams, data collection forms or overlays, and data collection graphics or overlays.

Storage of recorded audio or video in a "buffer" as stated herein does not designate a format for storage. In other words, a buffer as used herein may hold any audio or video stream in any format (e.g., an MPEG-4 format). A pre-movie or movie stored in a buffer does not designate a contiguous region of memory. Streams that are part of a pre-movie may be stored in the same or different buffers. Streams that are part of a movie may be stored in the same or different buffers. Streams that are part of a description or of a revised movie may be stored in the same or different buffers. In one implementation a buffer is coextensive with an MPEG-4 container.

A log is a list of records each describing a change and noting the time when the change occurred. Local logs 404 are updated on the occurrence of a change in the configuration or operation of incident recorder 208 and hand set 132. For example, local logs 404 may include an entry for application of power to hand set 132, removal of power from hand set 132, adjustment of a time base used by hand set 132 (e.g. synchronization of time of day, date), entry and exit from privacy mode (e.g., no recording of audio or video for pre-movie, movie, or revision; also referred to as Privacy function), and adjusting or establishing parameters that affect recording or revising (e.g., pre-movie buffer length, video resolution for pre-movie and/or movie, IVR script changes, software upgrades).

Environment logs 406 are updated on the occurrence of a change in the environment where incident recorder 208 is being used. For example, environment logs 406 may be updated in response to notice of a candidate beacon message received, a message indicating the incident recorder is part of an ad hoc network, notice of change in membership or substantial change of GPS location of members of an ad hoc network, identification of a weapon proximate to the incident recorder 208, notice of change in the identification of the author-operator, weapon activation message sent (what address or group address was sent), stimulus control message sent (intended type of electronic control device, control information sent, address or group address it was sent to), directive received for coordinated evidence collection (from what type and identity of device, what directive required of this incident recorder or operator), and notice that reorientation in accordance with a directive was accomplished.

Audio hub mike streams 408 include buffers for storage of audio for any one or more of pre-movies, movies, scene descriptions, interactive voice response answers by the operator, and revised movies.

Audio head mike streams 410 include buffers for storage of audio for any one or more of pre-movies, movies, scene descriptions, interactive voice response answers by the operator, and revised movies.

Audio oriented mike streams 412 include buffers for storage of audio for any one or more of pre-movies, movies, and revised movies.

Audio on-duty receiver streams 414 include buffers for storage of audio for any one or more of pre-movies, movies, and revised movies.

Video oriented camera streams 416 include buffers for storage of video for any one or more of pre-movies, movies, and revised movies.

Scene description documents 418 include buffers for text entry or scanned paperwork for revisions and revised movies.

Scene description audio streams 420 include buffers for supplemental audio from the author-operator (spoken impromptu or in reply to an interactive voice response script) for revisions and revised movies.

Scene description video streams 422 include buffers for supplemental video for revisions and revised movies.

Menus 424 include legends as described below with reference to Table 1.

Interactive voice response (IVR) streams 426 include audio streams used to prompt the author-operator and streams used to recognize the spoken reply of the author-operator to an IVR prompt.

Data collection forms 428 include blank forms and filled in forms. Forms include parameter names and storage for the selected value if a selection list of values is part of the form and/or storage for free form values (e.g., audio streams, video streams, transcribed text, text from speech recognition or IVR functions).

Data collection graphics 430 include blank graphics and marked graphics. Marks may be indicated by operation of any of controls 343 (e.g., a pointer control) and/or audio streams (e.g., spoken impromptu or in reply to an interactive voice response script).

Data 432 includes all variables and temporary storage required for the performance of the program code 402. Data may further include device identification for the component that stores the data structure (e.g., hand set 132) and/or for the primary subsystem to which it is a part (e.g., 208) and/or any or all of its components (e.g., personal hub 224, head set 222, on-duty transceiver 228).

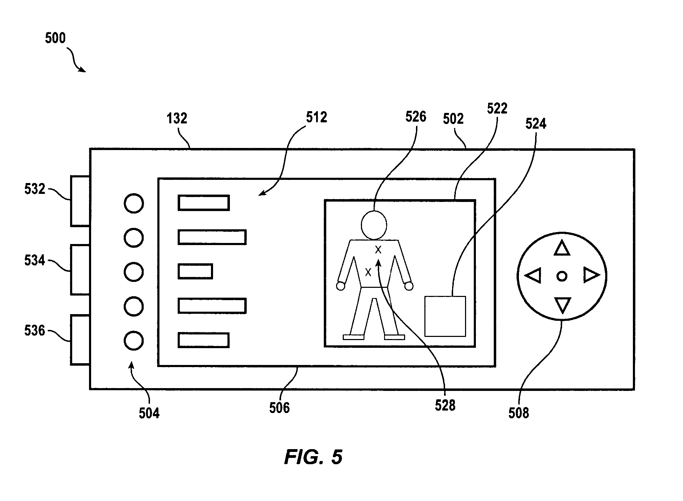

A hand set includes any device that facilitates the review and description of recorded audio and/or video. For example, hand set 132 of FIGs. 1, 2, 3A, and 5 may be implemented as shown in a front view, FIG. 5. As shown, the top side, right side, and bottom side are blank. The rear side includes terminals for connecting a battery charger of shift hub 120 to the battery that is internal to hand set 132. Antennas for the ad hoc transceiver and the local link transceiver are not shown. Hand set 132, as shown, includes both dedicated controls (532, 534, and 536) and general purpose controls (504 and 508). The general purpose controls are adjacent a display, for example display 506. All controls are sized and positioned for operation by the author-operator's fingers or thumbs. For example, when hand set 132 is attached to personal hub 224 (FIG. 2), only controls 532, 534, and 536 are accessible and operated by the operator's fingers. When hand set 132 is removed from personal hub 224, all controls are accessible, sized, and positioned to be operated by the operator's thumbs. The operator's fingers are used to hold and maintain the hand set generally between the operator's palms.

User interface 500, shows by way of example, a front view of hand set 132 including an enclosure 502, display 506, a column of buttons 504 along one edge of display 506, a pointer control 508, a stimulus control button 532, a mark button 534, and a privacy button 536. Display 506 is shown providing a presentation of legends 512, a presentation of data collection graphics 522, and a presentation of original video 524 in a picture-in-picture (PIP) format of a scene presently being described by the author-operator.

Enclosure 502 comprises high impact plastic. Enclosure 502 may be water resistant to protect all functions of hand set 132 from damage during rainy weather or accidental submersion. Enclosure 502 may be water resistant for incident recording underwater.

Display 506 is part of video monitor 342, discussed above.

The column of buttons 504 along one edge of display 506 provides controls for a multi-purpose user interface. Each legend 512 (five legends shown) describes the present function for the respective button. Legends may be organized in hierarchical menus.

Pointer control 508 facilitates entry of cursor directions up, down, left, right, and diagonal. A center "accept" function is also provided. The pointer control may rock slightly about its center in a conventional manner.

A stimulus control button 532 allows the operator to initiate or modify a stimulus control function of an electronic control device (or any function of a suitable data source or weapon) that is addressable and within communication range (e.g., within range of ad hoc transceiver 344).

When recording a pre-movie, operation of mark button 534 allows the operator to begin recording a movie. The resolution of audio and/or video recording may be changed to correspond to the configuration for movie recording (e.g., preferably a higher resolution than pre-movie recording). When recording a movie, operation of mark button 524 permits an operator to designate a time (e.g., the present time of day) as desirable for adding a description upon review of the movie. During recording, hand set 132 may log the operation of button 534 (e.g., in a general or special purpose log of local logs 404). Each operation of button 534 during recording a movie is herein referred to as making a mark, recording a mark, or designating a scene for review or description. During review of a movie, a list of logged times when button 534 was actuated may be used (e.g., in a manner analogous to hypertext links) to quickly navigate to respective scenes. The log may also track whether or not a description has been made for each recorded mark. During review of a movie, a list of recorded marks without descriptions may be presented to assist in completing a revision. During review of a movie, a list of recorded marks with descriptions may be presented to assist in reviewing descriptions.

A privacy button 536 stops audio and video recording thereby performing the Privacy function. When actuated by the user during pre-movie recording, actuation stops pre-movie recording. When actuated during movie recording, actuation stops movie and pre-movie recording.

The picture-in-picture format may be used to review any combination of two video streams of the same or different types discussed with reference to FIG. 4. As shown in FIG. 5, a scene (524) is being described by entries of cursor locations on a data collection graphic 522. Data collection graphic 522 portrays a human front view for collecting a description of where on the suspect 526 (202) the electronic weapon's tethered electrodes made impact 528 (212 and 214). Although this information may be clearly visible from the video, making an entry on a form may facilitate statistical analysis. The author-operator may operate pointer control 508 to locate the cursor over a point of graphic 522 that corresponds to a contact point (e.g., 212) and actuate the "accept" function of pointer control 508, as discussed above, to indicate the location of the contact point. The author-operator may repeat this step for the second contact point (e.g., 214). Completion of data collection with reference to graphic 522 may be indicated by operator actuation of a suitable button 504 in accordance with its legend (see menus discussed below with reference to Table 1).

State change diagram 600 of FIG. 6 defines states of a user interface in an implementation of hand set 132 of FIGs. 1, 2, 3 and 5. States include setting state 602, recording state 604, playing state 606, describing state 608, audio/video entry state 610, graphics entry state 614, and interactive voice response state 616. Operation continues in a state until all conditions are met for a state change. Table 1 describes legends and a next state entered after operation of a switch corresponding to a legend. The numbered legends in Table 1 correspond to the column of switches 504 of FIG. 5 numbered from top to bottom. Not all switches are used in each state.

**TABLE 1**

| **State** | **Legends** | **Next State** |
|---|---|---|
| Setting | 1 Record | 1 Recording |
| | 2 Play | 2 Playing |
| | 3 Device | 3 Setting |
| | 4 Personal | 4 Setting |
| | 5 Agency | 5 Setting |
| Recording | 1 Privacy Toggle | 1 Setting |
| | 2 Monitor Toggle | 2 Recording |
| | 3 Setting | 3 Setting |
| Playing | 1 Rate/Skip | 1 Playing |
| | 2 Raw/Described | 2 Playing |
| | 3 Mark | 3 Describing |
| | 4 Setting | 4 Setting |
| Describing | 1 Add Graphic | 1 Graphic Entry |
| | 2 Add AudioNideo | 2 AudioNideo Entry |
| | 3 Add IVR | 3 IVR |
| | 4 Play | 4 Playing |
| Graphics Entry | N/A | Describing |
| AudioNideo | N/A | Describing |
| Entry | | |
| IVR | N/A | Describing |

Table 2 describes the functions of the pointer control 508 in each state. In Recording state 604, the pointer control has no functions unless recording is being monitored. In Playing state 606, the functions of the pointer control depend on whether a movie is being played without descriptions (raw) or with descriptions (described).

**TABLE 2**

| **State** | **Pointer Control Functions** | |
|---|---|---|
| Setting | ↑ Highlight parameter row above present row | |
| | ↓ Highlight parameter row below present row | |
| | → Highlight alternative right of present, or scroll to increasing | |
| | values | |
| | ← Highlight alternative left of present, or scroll to decreasing | |
| | values | |
| | • Accept newly specified entry | |
| Recording | If monitoring on the display of live recording is enabled: | |
| | ↑ Increase brightness of display | |
| | ↓ Decrease brightness of display | |
| | → Increase volume | |
| | ← monitor decrease volume | |
| | • n/a | |
| Playing | Rate | Skip |
| | ↑ Faster | First Mark |
| | ↓ Slower | Last Mark |
| | → Forward | Next Mark |
| | ← Reverse | Previous Mark |
| | • Pause Toggle | Pause Toggle |
| Describing | N/A | |
| Graphic Entry | ↑ Move cursor up | |
| | ↓ Move cursor down | |
| | → Move cursor right | |
| | ← Move cursor left | |
| | Combination of ↑ or ↓ and → or ← Move cursor diagonal | |
| | • Accept Position | |
| Audio/Video | N/A | |
| Entry | | |
| IVR | N/A | |

All states are available when the hand set is removed from personal hub 224. Operation begins in Setting state 602 when power is initially applied to hand set 132. Unless not permitted by the Privacy function, pre-movie recording begins or continues in Setting state 602 whether or not hand set 132 is attached to personal hub 224. In response to operation of mark button 532, pre-movie recording is stopped and movie recording is started. Depending on memory size and intended use of hand set 132, recording of a movie preferably continues for several hours (e.g., 4 hours). During movie recording, marks are recorded to simplify later making of revisions. After movie recording is stopped, review and revisions may be made.

In Setting state 602, as shown above in Table 1, five (5) legends identify five (5) submenus for setting the configuration of hand set 132. See Table 3 for a description of the submenus that apply in the settings state. In each submenu, a presentation of a list of parameters is displayed. A parameter to set is listed on a row of the display. The current setting for alternative values may be highlighted; and the current value for numeric and date values may be shown. For a new alternative value, the desired alternative may be highlighted and "accepted" by operation of pointer control 508 as described for Setting state 602 in Table 2. For a new numeric or date value, pointer control 508 may be used to "scroll" to an appropriate value. An IVR script may be used to specify a desired value. The IVR script may be accompanied a presentation of written alternatives. After specification of a value for a Setting submenu of Table 3, the Setting main menu of Table 1 is again presented.

**TABLE 3**

| **Setting State** | **Parameter** | | **Alternative Values** |
|---|---|---|---|
| Record | Mode | | A/V, V Only, A Only, Privacy |
| | Resolution | | Limited, Full |
| | Monitor | A/V, V Only, A Only, None | |
| Playback | Date | | 01/01/2008 |
| | Time | | 21:35:02 |
| | Content | Raw, Described | |
| Device | Volume | 4 | |
| | Brightness | | 5 |
| | Ad Hoc Channel | A, B, C, D, E | |
| | Ad Hoc Power | Off, Limited, Full | |
| | Roles | | Lead only, Lead and Follow, Follow only, None |
| Personal | Name | | (Agency List) |
| | Voice Sample | | 01/30/2008, New |
| | Photo Sample | | 01/30/2008, New |
| Agency | Movie duration | Full Shift, Limited Shift | |
| | Pre-movie | | Video & Audio, Video Only |
| | Stimulus Ctrl1 | | Group-Address1 |
| | Stimulus Ctrl2 | | Unit-Address1 |
| | Stimulus Devices Projectiles, Cuffs, Clothing | | |

In the Record submenu of Table 3, recording can be audio and video, video only, audio only, or neither by selecting privacy. Video resolution may be set to a standard resolution (full) or a prescribed lower resolution (limited) for conserving memory in hand set 132. Display 506 may be actively monitoring the oriented camera or blank. Audio output may monitor the oriented microphone or be silent.

In the Playback submenu of Table 3, content of the playback may be selected as the original movie (raw) or the latest revised movie (described). During the playback of a revised movie, playback stops at each recorded mark and the description, if any, is played. When playback of the description is finished, the movie plays until the next recorded mark. During playback audio information is composed to produce sound on head speaker 336 and hub speaker 326 while video information is composed to produce a presentation on display 506. Legends 512 may be displayed over video information on display 506.

In the Device submenu of Table 3, channels and power level for communication (via ad hoc transceiver 344) may be specified. Hand set 132 may be authorized to accept and delegate support tasks (lead), accept support tasks (follow), or neither accept nor delegate support tasks. Support tasks may relate to tactics (e.g., act as an actuator for stimulus control), communication (e.g., serve as ad hoc network node with routing capability), and/or evidence collection (e.g., directives to reorient the oriented microphone or oriented camera for additional evidence gathering for an incident in process or prior to an action regarding an incident).

In the Personal submenu of Table 3, audio and video recordings made by author-operator of himself or herself may be made as required by hand set 132 for present or later operator authentication and/or documentation. The date of recording author-operator information is indicated. To avoid text entry errors, the correct spelling of all possible users' names may be provided as a list from which the operator selects his or her own name.

In the Agency submenu of Table 3, the amount of recording may be limited to less than a maximum period (e.g., 8 hours) as desired. By limiting the recording, additional memory may be available for descriptions and revisions. Pre-movie recording may omit audio recording. For tactical tasks (e.g., stimulus control), addresses may be specified as unit addresses (e.g., a list, range, or list of ranges) used for example for reactivating a single round electrified projectile. Further, addresses may be specified as group addresses used for example for reactivating any round having an address within the group.

Functions of an electronic control device (e.g., an electrified projectile) may be identified by an address. Control of a function of an electronic control device may be accomplished by providing (e.g., sending, transmitting) the function address to the electronic control device. Upon receipt of the address, the electronic control device performs the function controlled by that address. An electronic control device may have any number of addresses for particular stimulus control functions. For example, an electrified projectile may have only one stimulus control function, that is to reactivate the stimulus to restrain the suspect after an initial stimulus duration has lapsed. Other stimulus control functions may include specifying any parameter of the stimulus signal (e.g., charge per pulse, pulse repetition rate, pulses per pulse group, pulse duration, energy available per pulse, pulse amplitude).

An electronic control device may respond to an address that is specific to the individual device or that is common to a group of devices. For example, a single round electrified projectile may have a group address (e.g., 1010) and an individual unit address (e.g., 265). A group address may be used to control all projectiles having the same group address. The individual address may be used to control an individual projectile to the exclusion of other projectiles of the same group or another group. A group address may be assigned, for example, to all projectiles issued by a particular agency. A unit address may fall within a range of a group address. For example, when a group address is understood to indicate a range (e.g., group address 200) all individual units with in the range (e.g., all unit addresses between 201 and 299, including 265) may be controlled by the group address.

Functions of an ECD may also be controlled using geographic criteria (e.g., reactivation only while the ECD is within a geographic area). A plurality of ECDs may transmit a coordinate of their respective locations along with a unique identifier. A primary subsystem, for example an activator, may receive the coordinate and identifier of the various electronic control devices. Using the coordinate of its own GPS location, the activator may determines the proximity of each electronic control device. The activator may further identify a geographic area for reactivation. Activation within the geographic area may be accomplished by correlating the unique identifiers to an ECD address, identifying which ECDs are within the geographic area, and transmitting only the addresses of the ECDs that are positioned within the geographic area. In the event that several electronic control devices belong to the same group, the activator cannot activate only the ECDs within the geographic area by transmitting the group address because some ECDs that are members of the address group may not lie within the geographic area. Thus, geographic addressing of an ECD may be accomplished by transmission of individual ECD addresses within the geographic area.

In Recording state 604, pre-movie recording stops and movie recording begins. The transition from setting state 602 to recording state 604 may be accomplished by operation of a dedicated control (e.g., 534). In one implementation, exit from recording state 604 to return to setting state 602 is responsive to the operator holding a dedicated control for at least a minimum duration (e.g., 534 for 3 seconds). In Recording state 604 the display may be active, static, or blank. If the Privacy function is active, display 506 presents a static banner (e.g., "Privacy"). If the Privacy function is not active and the Monitoring function (refer to Monitor Toggle of Table 1) is active, then display 506 presents live video stream from oriented camera 337. If the Privacy function is not active and the Monitoring function is not active, display 506 is blank.

In Recording state 604, the Privacy Toggle functions like the privacy button 536. The Monitor Toggle function may be used to activate the display 506 and at least one speaker 326 or 336 for a live presentation of the movie being recorded.

Prior to transition to playing state 606, a presentation of a list of movies and revised movies (e.g., identified by start time and date) may be offered to the operator for selection. The list and its controls may be similar to parameters listed in Setting mode 602, as described with reference to Table 2.

While in Playing state 606, a transition to Describing state 608 may be made by operation of Mark button 534. The Rate/Skip function (refer to Rate/Skip of Table 1) allows operator control of playback speed and direction using pointer control 508 with one of two sets of capabilities. In Skip mode, control of playback using pointer control 508 refers to recorded marks. In Rate mode, control of playback does not refer to recorded marks. The Raw/Described function (refer to Raw/Described of Table 1) specifies whether the playback ignores descriptions (raw mode) or stops at each recorded mark and plays the description (described mode).

When playing with descriptions, the presentation on display 506 may include a thumbnail of the scene being described in a picture-in-picture format while playing the description. Other information along the top and bottom edges of the display may include any of the following: location (e.g., GPS coordinate) of the incident recorder when the recording was made, orientation described by the orientation detector 338 (e.g., azimuth and elevation), whether a description is available for the scene being played (e.g., only in raw mode), the date and time of day when the recording was made or when the description was made, the time of the presently playing scene with reference to duration of the entire movie or revised movie. During a playback (raw or described), the Mark function allows the operator to immediately transition to Describing state 608 to enter a new description whether or not a recorded mark exists at this time in the movie.

In Describing state 608, a recorded mark is made in association with the present scene identified for description. Three functions are available for adding three types of descriptions: graphics, audio and/or video recording, and a guided discussion involving an Interactive Voice Response (IVR) script. During entry of a description, a thumbnail of the scene being described may be shown on the display in a picture-in-picture (PIP) format. The Add Graphic function transitions to Graphics Entry state 614 where, after selection of a suitable data collection graphic 430, the author-operator may mark the graphic form and add it to the revised movie in association with the recorded mark or identified scene. The Add Audio/Video function transitions to AudioNideo Entry state 610 where recording from oriented camera and head microphone begins immediately. The recorded information is added to the revised movie in association with the recorded mark or identified to the scene. The Add IVR function transitions to IVR state 616 where an IVR script is begun to gather audio information from the author-operator. A PIP presentation may in addition present written prompts during the IVR script.

Legends may be presented beside the movie or PIP presentation. In another implementation, the entire display area is used for the movie or PIP presentation.

An incident recorder, according to various aspects of the present invention, may periodically transmit its unique communication address and its location (e.g., a GPS coordinate). For example, when an incident recorder as discussed above is configured to Lead it responds to other incident recorders that have locations proximate to a location of interest. A location of interest may be a location of an electronic control device (e.g., 370) that is subject to addressable stimulus control. A location of interest may be a location of a human or animal (herein called a target) (e.g., 710) planned to be hit by such an electronic control device (e.g., a wireless electrified projectile).

The Lead incident recorder may request any of several support tasks be accepted by other subsystems configured to Follow. Tactical support tasks may be requested. Tactical support tasks may include any task related to apprehension of a suspect. Tactical support tasks may include transmitting a stimulus control signal to an electronic control device that is capable of addressable stimulus control. Communication support tasks may be requested. Communication support tasks may include any tasks for enhancing communication in an ad hoc network (e.g., accepting new members into the network, routing traffic to or through nodes of the network, discovering routes, informing other nodes of members and appropriate routes, extending the range of the network). Collection support tasks may be requested. Collection support tasks may include any directives for operation of an incident recorder. For example, asking a Follower to turn and record a movie facing the likely location of a suspect. Assistance with gathering evidence may be facilitated. Assistance with stimulus control may be facilitated. Assistance with communication among incident recorders may be facilitated.

A subsystem suitable for performing a Follow role as to addressable stimulus control, is herein called an activator. An activator may comprise a hand set (though memory for software for recording may be omitted with commensurate simplifications of processor and local link transceiver); a head set (though an oriented mike, oriented camera, and orientation detector may be omitted); a personal hub (though support for omitted functions of the hand set and head set may be omitted); and an on-duty transceiver. These components, except for omitted functions, may include the structures and functions as discussed above.

For example, activator 360 of FIG. 3B includes processor 361, memory 362, video monitor 363, controls 364, ad hoc transceiver 365, and wired interface 366. Processor 361 is analogous to processor 340 with commensurate simplifications due to the reduced set of functions and the special functions of an activator as compared to a hand set. Memory 362 may include the data structures 400 discussed above with simplifications commensurate with the functions of processor 361. Video monitor 363 and controls 364 may be simplified in comparison to counterparts in hand set 132 when operation with a video camera is not required. The menus for the user interface (363, 364) of an activator may be simplified in accordance with the functions of processor 361. Ad hoc transceiver 365 is compatible with ad hoc communications discussed above with shift hub 120, handset 132 and ECD 370. Wired interface 366 facilitates docking in docks 126 but may be omitted when ad hoc transceiver 365 performs necessary configuration (e.g., addresses) and data transfer functions (e.g., logs).

In one implementation, control 364 is not enabled for operation by an operator prior to receiving an address of at least one electronic control device.

An electronic control device (ECD) includes any apparatus having a circuit for electrical stimulation as discussed above. A primary subsystem may consist of an ECD. An ECD may be packaged as a hand gun (launching projectiles as in FIG. 2), stun baton, or wireless electrified projectile (propelled from a launcher as in FIG. 7). One or more ECD circuits may be packaged as a mine, grenade, check-point turret, or an area denial installation. One or more ECD circuits may be incorporated into clothing, hand cuffs, shackles, shields, or nets. For example, ECD 370 of FIG. 3C includes processor 371, memory 372, transceiver 373, stimulus generator 374, deployment unit 375, and wired interface 376. These functions are described in the US patents incorporated herein by reference.

Transceiver 373 may include a reduced capability transceiver when all the functions of an ad hoc transceiver are not required. Transceiver 373 may be replaced by a receiver when no transmit functions are desired.

Wired interface 376 may be omitted when not required for writing an address into the ECD and recharging an internal battery.

Deployment unit 375 may deploy probes (as in ECD 210 or as in projectile electrode deployment). Deployment unit 375 may propel wire-tethered probes (not shown) from the ECD (e.g., ECD is a launcher), or deploy electrodes (not shown) into position for contacting a target (e.g., ECD itself is a wireless electrified projectile). Deployment unit 375 may be omitted for example if the ECD itself is launched by an external propellant toward the target and no further deployment of electrodes is needed.

An ECD may be assigned an address or a plurality of addresses. The address may be unique to the ECD. As set forth above, functions of an ECD may be identified and controlled by receipt of an address. In an implementation, an electrified projection operates as an ECD. The electrified projectile is assigned a unique address that controls delivery of the stimulus signal. Prior to launch, delivery of the stimulus signal is inhibited regardless of receipt of the address. Launch of the electrified projectile may activate a single delivery of the stimulus signal without receipt of the address. After launch, a next delivery of the stimulus signal may be activated by a receipt by the electrified projectile of its unique address or an address that contains the group address portion of the electrified projectile's unique address. The electrified projectile may receive the address from any primary subsystem enabled to transmit the address, thus the primary subsystem that launched the electrified projectile plus any other electrified projectile that has been loaded with the address of the electrified projectile may also transmit the address to control a next delivery of the stimulus signal. Transmission of an address may be governed by an authorization protocol, for example, the Lead, Lead and Follow, and Follow authorization protocol described below.

In shift hub 120, hand set 132, activator 360, and ECD 370, the ad hoc transceiver, memory, and processor may cooperate according to applicable commands of Table 4. Transmitting may include transmitting an address for further communication. Transmitting may include transmitting an acknowledgement and/or reply to a command received. Receiving may include receiving and taking suitable action. SS stands for secondary subsystem and includes shift hubs (SH) (e.g., 120) and locker docks (LD). PS stands for primary subsystem and includes incident recorders (INR) (e.g., 208), activators (AVR) (e.g., 360), and electronic control devices (ECD) (e.g., 370).

**TABLE 4**

| **Sources of Command -> Command description** | **Receivers of Command :: Effect** |
|---|---|
| SS, INR -> Begin beacon of identification. Beacon timing may be specified. | PS :: begins transmitting its unique address to be used in further communication and its location (if available) |
| SS -> Synchronize time base. Current or future time may be specified. | PS :: sets its date and time of day time base (e.g., used for logs) |
| SS, INR -> Stop beacon of identification. Quiet period may be specified. | PS :: transmits no beacon messages during a default period of the specified period. |
| SS, LD, INR -> Report configuration. | PS :: transmits its make, model number, location, identification, and the same for its components; ECD :: may further transmit its capabilities (e.g., loaded, safety off, battery capacity, number of rounds remaining, number of rounds launched, history of stimulations) and configuration settings (e.g., electrical stimulus charge, energy, timing). INR :: may further transmit its capabilities (e.g., storage space available for further recording) and its orientation. |
| SS, PS -> Change configuration as specified. | ECD adjusts any parameter of the stimulation current (e.g., pulse width, pulse repetition rate, amplitude, charge per pulse). |
| AVR -> Control stimulation. Launch, Start, Stop, and/or Repeat may be commanded. Any stimulation circuit parameter or output signal parameter may be affected. The parameter to affect and the new value may be specified. Start/Stop/Repeat magnitudes and timing may be specified. | ECD :: performs the command immediately but within its capabilities. For example, a launch command is more suitable for a launcher than for the projectile being launched. If the ECD in addition has a manual trigger, the Start function may enable operation of the electrical stimulation circuit in response to a next operation of the trigger (e.g., by an operator or by the target). |
| SS -> Accept new identification. Deletion of prior identification may also be commanded. | PS :: accepts and stores a group address or unique address for use in future receiving and/or transmitting. |
| SS -> Transfer an incident report. Date and time identifying the report may be specified. | PS :: transmits its log of events; INR :: further transmits stored incident information as a created and/or revised incident report. |
| PS -> New incident identifier. May specify start time and location of the suspect. May specify start time in the past. May indicate incident has not yet started. | PS :: transmits an acknowledgement and associates the new incident identifier with the current or next incident. |
| PS -> Reorient to face new location, elevation. May | INR :: notifies operator to orient toward new location |
| specify azimuth if receiver's location is known and receiver cannot determine new location. May specify time when action must be completed. | (or azimuth) and elevation. |
| PS -> transmit at a particular time for purposes of determining distance from commanding PS to responding PS (range). | PS :: transmits at designated time enabling time of flight ranging, triangulation ranging when one subsystem is moving with respect to another, and/or triangulation ranging by two subsystems near an ECD. |
| SS, PS -> Enable/Disable stimulation capability | ECD :: for an operator triggered ECD (e.g., hand gun, grenade, area denial system), when enabled, an operator pulling the trigger will activate a launch projectiles and/or start of electrical stimulus; for a target triggered ECD (e.g., cuffs, clothing, mine, area denial system), the trigger operated by the target is effective to launch projectiles and/or start an electrical stimulus. |

FIG. 7 is a plan view of another hypothetical incident involving three law enforcement officers apprehending a suspect while each officer is operating a respective primary subsystem of the present invention. These subsystems are being worn by officers at different locations. Subsystem 208 is northwest of subsystem 360, which is northwest of subsystem 209. Suspect 710 will be hit by a wireless electrified projectile type ECD 370 both being northeast of subsystem 360. An exemplary sequence of communication among subsystems 208, 360, 209, and projectile 370 is described in FIG. 8.

In incident 700, incident recorder 208 is configured to Lead, activator 360 is configured to Follow and incident recorder 209 is configured to Follow. For simplicity of this discussion, the roles Lead, Lead and Follow, and Follow are general as to all authorizations related to stimulus control, and all directives as to evidence gathering and communication. In another implementation, these roles may be further limited to particular functions in each of the categories of stimulus control, evidence gathering, and communication. Configuration may also be expanded to permit several roles of any type to be set for a single incident recorder as may be suitable for a particular expected security, law enforcement, or military incident.

Communications between incident recorders, activators, and electronic control devices for stimulus control functions may be accomplished with one ad hoc transceiver in each subsystem. In another implementation, different transceivers are used for different communication links. Use of one ad hoc transceiver is appropriate where all communication uses one communication channel and protocol. If greater communication capabilities are required by the expected environment in which communication is to be reliable, different channels may be used and different transceivers may be used for each type of device: incident recorder, activator, electronic control device.

The sequence 800 of communications described in FIG. 8 accomplishes communication support, tactical support, and recording support in an exemplary implementation applied to a hypothetical incident.

At time 802 activator 360 of its own initiative transmits its location and unique address omnidirectionally (e.g., a beacon) or fortuitously in the direction of incident recorder 208. For example, activator 360 may transmit periodically in a sequence of directions. The period may be random to reduce interference from other beacon broadcasts. At time 802 incident recorder 208 receives the transmission from activator 360. In another implementation, activator 360 further transmits its configuration (e.g., an activator make T, model xyz) according to a known list of types of systems that communicate for any of the purposes described above.

At time 804, incident recorder 208 tests the proximity of activator 360 to a suspect 710. The location of suspect 710 was determined by incident recorder 208 by using a measure of azimuth and range. The location of activator 360 is apparent from the message received from activator 360 at time 802. The test passes because the distance between activator 360 and suspect 710 is less than a limit (e.g., closer than incident recorder 208 is to suspect 710).

A range may be determined by an operator and entered into the incident recorder 208, provided by an ECD (e.g., time of flight detector), and automatically (e.g., electronic range finder associated with incident recorder 208). A range may further be provided by cooperation of several incident recorders by triangulation (e.g., azimuth from several incident recorders to target used to calculate a location of intersection). The azimuth, range and GPS coordinate of incident recorder 208 may be used to calculate a GPS coordinate of the position of suspect 710 for transmission and/or comparison to the position of activator 360.

At time 806 incident recorder 209 transmits its location, a unique address and may also transmit its configuration in a manner analogous to the message at time 802. Transmission may be omni-directional or directional. At time 806, activator 360 receives the transmission from incident recorder 209.

At time 808, activator 360 tests the proximity of itself to incident recorder 209 using the location information received from incident recorder 209 and its own location information as sent at time 802. The test passes.

At time 810, incident recorder 208 transmits a tactical support request addressed to activator 360 that authorizes an addressable stimulus control to be initiated by the operator of activator 360 for an address of an electronic control device (e.g., projectile 370) having a reactivate capability and having a matching address. The address for ECD 370 may be a unique address or may be a group address (e.g., all ECDs checked-out to the operator of incident recorder 208, all ECDs checked-out to a team, all ECDs checked-out on a particular date, all ECDs of a particular configuration). The request transmitted by incident recorder 208 includes the unique address and/or group address of ECD 370 and the location of suspect 710. The fact that the projectile has not yet been launched may also be included with the request.

At time 812, incident recorder 208 transmits a recording support request that asks for assistance for gathering evidence. The request is addressed to activator 360. Both requests at time 810 and time 812 may be accompanied by information for activator 360 to determine whether accepting these tasks is within its available resources.

At time 814, activator 360 transmits an acceptance of the delegated tactical task received at time 810.

At time 816, activator 360 notifies its operator that he or she is authorized to reactivate a stimulus function for a projectile at the location of the suspect 710. Authorization may be implied by receipt of a valid address for activator 360. The notice further includes identification of a particular type of stimulus control (reactivation) for a particular type of electronic control device (projectile) derived from the request. The notice still further includes the azimuth to the projectile derived from the position of the projectile provided in the request. The operator now knows that a user interface control (e.g., button 532) is enabled to perform the reactivation whenever he or she deems reactivation is necessary. The notice may be made by synthesized voice delivered to a speaker (e.g., head speaker 336) or by a presentation on a display (e.g., 506) accompanied by an alert to review the display for a message.

At time 818, activator 360 transmits a recording support request addressed to incident recorder 209 that asks for a reorientation of the incident recorder toward location 710.

At time 820, incident recorder 209 transmits an acceptance of the recording support task. The transmission is addressed to activator 360.

At time 822, incident recorder 209 notifies its operator to be ready to turn his or her oriented microphone and oriented camera. In another implementation, the operator of incident recorder 209 is notified and must approve the request before the task is accepted.

At time 824, activator 360 transmits an acceptance of the recording support task. The transmission is addressed to incident recorder 208.

At time 826, incident recorder 208 addresses a transmission to activator 360 with information intended for incident recorder 209 with respect to the recording support task at time 812. Incident recorder 209 may be out of range from incident recorder 208.

At time 828, in response, activator 360 addresses a transmission to incident recorder 209 and transmits (e.g., forwards) a copy of the information activator 360 just received. By forwarding the information, activator 360 is performing a communication support task. Other communication support tasks (e.g., to become a master of the network for purposes of creating and managing a routing table for supporting central review of multiple video streams) may be requested, evaluated as to sufficiency of resources to accomplish the task, and accepted using similar request/accept communications not shown.

On receiving the forwarded information, incident recorder 209 notifies its operator to reorient according to the forwarded information, that is toward location 710. An audible and/or visible indication of the present orientation error measured between present orientation and desired orientation may be generated (e.g., by the parts of incident recorder 209 corresponding to orientation detector 338, transceivers 332, 347, processor 340, audio out circuit 346, mixer 330 and head speaker 336) and continued until null. The audible and/or visible indication of error may vary (e.g., pitch, pulse rate, color, brightness) with efforts to reorient until proper orientation is achieved.

At time 830, the operator of incident recorder 208 also operates a launcher that launches ECD 370 (a wireless electrified projectile) toward target 710. Projectile 370 hits target 710 and begins a 30-second cycle that includes electrical stimulation that interferes with the skeletal muscles of target 710. Target 710's ambulation is stopped because all skeletal muscles in his or her legs contract continuously for the 30-second cycle. Incident recorder 208 may also address a transmission to activator 360 with information supporting the tactical task that was delegated and accepted. This message may be omitted if all necessary information was already transmitted with the request.

At time 832, the operator of activator 360 decides, according to his or her training and judgment, to reactivate the electrical stimulus generating function of ECD 370. Reactivating may provide the operator of activator 360 sufficient time to arrive at the suspect's location and complete an arrest (e.g., place hand cuffs (not shown) on the suspect). This operator actuates a control 364 of the user interface of activator 360 (e.g., analogous to button 532 of hand set 132). In response to actuation, activator 360 addresses a transmission to ECD 370 and transmits a stimulus control command.

At time 832, ECD 370 reactivates its signal generator 374. The effect of reactivating may extend the 30-second cycle for an additional 30 seconds (e.g., stretch it up to 59 seconds), or schedule a break between cycles (e.g., 3 seconds) and then perform a second 30-second cycle similar in all respects to the first 30-second cycle. In another implementation, reactivation results in an adjusted electrical stimulus current that may be in accordance with information transmitted from incident recorder 208 at time 830.

The following patents and patent applications are incorporated herein by this reference in their entirety for any purpose without being limited by the context of this statement: US Patents 7042696, 7280340, 7234262, 7057872, 7145762, 7102870, 7409912, 7143539, 7218077, 7336472, 7363742, and 7305787; US Published Applications 2007/0075261, 2007/0271830, 2008/0158769, 2007/0070574, and 2007/0188972; US Patent Applications S/N 11/771126, and 11/771240; and WIPO Published Application WO2008/097377. The teachings disclosed herein and by incorporation by reference may be combined in any practical manner to achieve various implementations of the structures, functions, and combinations of the present invention.

The foregoing description discusses preferred embodiments of the present invention, which may be changed or modified without departing from the scope of the present invention as defined in the claims. While for the sake of clarity of description several specifics embodiments of the invention have been described, the scope of the invention is intended to be measured by the claims as set forth below.

## Claims

1. A primary subsystem for recording and annotating an incident, the primary subsystem comprising:
a means for recording original data related to the incident;
a means for determining a revision related to the original data; and
a means for recording the revision.

2. The primary subsystem of claim 1 further comprising a means for detecting and providing the original data to the means for recording.

3. The primary subsystem of claim 2 wherein the means for detecting detects any one or more of:
sound; and
light.

4. The primary subsystem of claim 1 further comprising a means for detecting and providing additional data to the means for determining.

5. The primary subsystem of claim 1 wherein the means for recording, in response to an operation of the means for determining, records a mark associated with a portion of the data and a time of the operation during recording original data.

6. The primary subsystem of claim 5 wherein:
the means for determining comprises a display that presents a list of links;
each link of the list of links is associated with a respective mark; and
selection of a link recalls a portion of the data associated with the respective mark.

7. The primary subsystem of claim 6 wherein the list further comprises indicia of whether a revision exists in association with the respective mark.

8. The primary subsystem of claim 1 wherein the means for determining comprises a display for providing a presentation of a portion of the data during recording of the revision.

9. The primary subsystem of claim 1 wherein the means for determining provides a series of audible questions to an operator and receives a verbal response to each question from the operator to determine the revision.

10. A primary subsystem for recording and annotating an incident, the primary subsystem comprising:
a recorder that records original data related to the incident; and
a user interface that determines a revision related to the original data; wherein
the recorder records the revision.

11. The primary subsystem of claim 10 further comprising a detector that detects the original data and provides original data to the recorder.

12. The primary subsystem of claim 11 wherein the detector detects any one or more of:
sound; and
light.

13. The primary subsystem of claim 10 further comprising a detector that detects additional data and provides the additional data to the user interface for determining the revision.

14. The primary subsystem of claim 1 or 10 wherein the revision comprises any one or any combination of two or more of:
a sound that is not part of the original data;
a description that is not part of the original data;
an image that is not part of the original data;
information of a printed image that is not part of the original data;
a video that is not part of the original data;
text that is not part of the original data;
a scanned image that is not part of the original data; and
a description of a scene.

15. The primary subsystem of claim 1 or 10 wherein the revision describes the incident.

16. The primary subsystem of claim 1 or 10 wherein determining a revision comprises comprises any one or any combination of two or more of:
supplementing the original data with a sound;
supplementing the original data with an image;
supplementing the original data with information of a printed image;
supplementing the original data with a scanned document;
supplementing the original data with a text;
reorganizing the original data;
selecting from the original data;
associating emphasis with at least a portion of the original data;

17. The primary subsystem of claim 1 or 10 wherein determining a revision comprises:
providing a series of audible questions to an operator; and
receiving a verbal response to each question from the operator.

18. The primary subsystem of claim 1 or 10 wherein the revision comprises:
a form or image of a human or animal target; and
a markup provided by the operator, that describes electrode contact with the target.

19. The primary subsystem of claim 10 wherein the recorder, in response to an operation of the user interface, records a mark associated with a portion of the data and a time of the operation during recording of the data.

20. The primary subsystem of claim 19 wherein:
the user interface comprises a display that presents a list of links;
each link of the list of links is associated with a respective mark; and
selection of a link recalls a portion of the data associated with the respective mark.

21. The primary subsystem of claim 20 wherein the list further comprises indicia of whether a revision exists in association with the respective mark.

22. The primary subsystem of claim 10 wherein the user interface comprises a display for providing a presentation of a portion of the data during recording of the revision.

23. A recorder for use by a human operator at an incident, the recorder for use with a provided head set for mounting to turn with the operator's head, the head set includes a camera oriented away from the operator, and a microphone for receiving vocal sound from the operator, the recorder comprising:
a hand set for operation in the operator's hands, the hand set comprising:
(1) a display for presenting a plurality of legends; and
(2) a processing circuit coupled to the camera, the microphone, and the display, the circuit performing instructions to:
(a) store a sequence of containers wherein a container of the sequence includes first data responsive to the camera for a first period;
(b) drive the display in accordance with the sequence to present a first presentation comprising a plurality of scenes;
(c) drive the display in accordance with the sequence to present a second presentation comprising one particular scene of the plurality of scenes, the particular scene corresponding to one or more particular containers of the sequence; and
(d) store, in association with a container of the one or more particular containers, second data responsive to the microphone for a second period.
